(19)

Europäisches
Patentamt
European
Patent Office
Office européen
des brevets

(11) **EP 4 699 852 A1**

(12) **EUROPEAN PATENT APPLICATION**
published in accordance with Art. 153(4) EPC

(43) Date of publication:
**25.02.2026 Bulletin 2026/09**

(21) Application number: **24883609.0**

(22) Date of filing: **28.11.2024**

(51) International Patent Classification (IPC):
**B60L 53/00** (2019.01)      **B60L 53/60** (2019.01)

(86) International application number:
**PCT/CN2024/135348**

(87) International publication number:
**WO 2026/011663 (15.01.2026 Gazette 2026/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.07.2024   CN 202410912856**

(71) Applicants:
• **Contemporary Amperex Technology Co., Limited
Jiaocheng District
Ningde
Fujian 352100 (CN)**
• **Contemporary Amperex Future Energy
Technology
(Shenzhen) Limited
Shenzhen, Guangdong 518100 (CN)**

(72) Inventors:
• **WU, Kai**
**Ningde, Fujian 352100 (CN)**
• **ZHENG, Zhimin**
**Ningde, Fujian 352100 (CN)**
• **XU, Jinmei**
**Ningde, Fujian 352100 (CN)**
• **CHENG, Yong**
**Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **CHARGING APPARATUS, CHARGING METHOD AND CHARGING SYSTEM**

(57)   Embodiments of the present application disclose a charging apparatus, a charging method and a charging system. The charging apparatus comprises three charging modules, wherein a first charging module receives a first voltage of an AC grid, converts the first voltage into a first output voltage, and provides the first output voltage to a first device to be charged for charging; a second charging module receives a second voltage of the AC grid, converts the second voltage into a second output voltage, and provides the second output voltage to a second device to be charged for charging; a third charging module receives a third voltage of the AC grid, converts the third voltage into a third output voltage, and provides the third output voltage to a third device to be charged for charging. The first voltage, the second voltage and the third voltage have the same frequency and amplitude, with a phase difference of 120 degrees between each two thereof; and the three charging modules are configured to control the three voltages of the AC grid to charge the first device to be charged, the second device to be charged and the third device to be charged simultaneously.

FIG. 1

## Description

## CROSS-REFERENCE TO RELATED APPLICATIONS

The present application is proposed based on Chinese Patent Application No. 202410912856.X filed on July 9, 2024 and entitled "CHARGING APPARATUS, CHARGING METHOD AND CHARGING SYSTEM", and claims the priority of the Chinese patent application, the entire content of which is incorporated herein by reference.

## TECHNICAL FIELD

The present application relates to the technical field of grid charging, and more particularly to a charging apparatus, a charging method and a charging system.

## BACKGROUND

With the increasing demand for environmental protection for cars in cities, the use of pure electric new energy vehicles is increasing in China, so it is particularly important to provide convenient and safe energy supply for electric vehicles. The existing electric vehicle charging stations usually include several charging piles, and each charging pile can only be connected with one charging gun each time and thus can only charge one electric vehicle. If multiple electric vehicles need to be charged simultaneously, multiple charging piles need to be configured, resulting in cost increase. In order to reduce the cost, due to the limited number of charging piles, electric vehicles may have to queue for charging, which reduces the charging efficiency.

## SUMMARY OF THE INVENTION

The present application provides a charging apparatus, a charging method and a charging system, which can reduce costs and also can improve charging efficiency.

The technical solutions of the present application are implemented as follows:

According to a first aspect, an embodiment of the present application provides a charging apparatus. The charging apparatus includes three charging modules, and the three charging modules include a first charging module, a second charging module and a third charging module, where

the first charging module is configured to receive a first voltage of an AC grid, convert the first voltage into a first output voltage, and provide the first output voltage to a first device to be charged for charging; the second charging module is configured to receive a second voltage of the AC grid, convert the second voltage into a second output voltage, and provide the second output voltage to a second device to be charged for charging; and
the third charging module is configured to receive a third voltage of the AC grid, convert the third voltage into a third output voltage, and provide the third output voltage to a third device to be charged for charging.

The first charging module, the second charging module and the third charging module have a one-to-one correspondence relationship with the first device to be charged, the second device to be charged and the third device to be charged; the first voltage, the second voltage and the third voltage have the same frequency and amplitude, with a phase difference of 120 degrees between each two thereof; and the three charging modules are configured to control the three voltages of the AC grid to charge the first device to be charged, the second device to be charged and the third device to be charged simultaneously.

Through the above technical means, the charging apparatus includes the three charging modules, and the three charging modules can be configured to control the three voltages of the AC grid to charge the three devices to be charged (such as electric vehicles) simultaneously. Specifically, the first charging module receives the first voltage of the AC grid, the second charging module receives the second voltage of the AC grid, and the third charging module receives the third voltage of the AC grid. Moreover, the first voltage, the second voltage and the third voltage have the same frequency and amplitude, with a phase difference of 120 degrees between each two thereof. In this way, the charging apparatus can charge three vehicles simultaneously, thereby avoiding the situation that electric vehicles have to queue for charging, and improving the charging efficiency. Moreover, the three charging modules are respectively connected with the three voltages of the AC grid, and the phase difference between each two of the three voltages is 120 degrees, thereby simplifying the circuit structure of the charging apparatus, and reducing the cost. Furthermore, charging three vehicles simultaneously can also ensure the three-phase balance of the AC grid, thereby avoiding the damage to components, and improving the safety of vehicle charging.

In some embodiments, a first input end of the first charging module is connected with a first phase line of the AC grid; a first input end of the second charging module is connected with a second phase line of the AC grid; a first input end of the third charging module is connected with a third phase line of the AC grid; and a second input end of the first charging module is respectively connected with a second input end of the second charging module and a second input end of the third charging module.

Through the above technical means, for the first charging module, the second charging module and the third charging module, a star connection method is adopted between the three charging modules and the AC grid, and the connection method is simple. Moreover, the received three voltages have the same frequency and amplitude, with a phase difference of 120 degrees between each two thereof, so that the AC grid can be controlled to charge the three devices to be charged simultaneously. Furthermore, the three-phase balance of the AC grid is ensured during the charging process, thereby improving the charging efficiency.

In some embodiments, a first input end of the first charging module is connected with a first phase line of the AC grid, and a second input end of the first charging module is connected with a third phase line of the AC grid; a first input end of the second charging module is connected with a second phase line of the AC grid, and a second input end of the second charging module is connected with the first phase line of the AC grid; and a first input end of the third charging module is connected with the third phase line of the AC grid, and a second input end of the third charging module is connected with the second phase line of the AC grid.

Through the above technical means, for the first charging module, the second charging module and the third charging module, a triangle connection method is adopted between the three charging modules and the AC grid. Under this connection method, the AC grid can also be controlled to charge the three devices to be charged simultaneously, and the three-phase balance of the AC grid is ensured during the charging process. In addition, the three voltages under the triangle connection method are higher than the three voltages under the star connection method. Compared with the star connection method, the triangle connection method can provide higher charging power, thereby further improving the charging efficiency.

In some embodiments, the first charging module, the second charging module and the third charging module have the same circuit structure; and the first charging module includes a first power unit, a first switch unit and a first charging interface, the first switch unit is connected between the first power unit and the first charging interface, and the first charging interface is configured to connect the first device to be charged.

Through the above technical means, because the first switch unit is connected between the first power unit and the first charging interface, the path between the first power unit and the first charging interface can be controlled to be switched on or switched off by switching on or switching off the first switch unit. In this way, before the first device to be charged is connected to the first charging interface, the first switch unit is in a switched-off state, thereby avoiding the phenomenon of electric shock when a user manually connects the first device to be charged to the first charging interface, and reducing the harm to personal safety.

In some embodiments, the first switch unit includes a first switch and/or a second switch, where the first switch is connected between a positive electrode end of the first power unit and a positive electrode end of the first charging interface; and the second switch is connected between a negative electrode end of the first power unit and a negative electrode end of the first charging interface.

Through the above technical means, the path between the first power unit and the first charging interface can be controlled to be switched on or switched off by switching on or switching off the first switch and/or the second switch. In this way, before the first device to be charged is connected to the first charging interface, the first switch and the second switch are both in a switched-off state, thereby avoiding the phenomenon of electric shock when a user manually connects the first device to be charged to the first charging interface, and reducing the harm to personal safety.

In some embodiments, the first charging module further includes a first pre-charging unit, where the first pre-charging unit is connected in parallel to two ends of the first switch; or, the first pre-charging unit is connected in parallel to two ends of the second switch.

Through the above technical means, the first pre-charging unit may be connected in parallel to two ends of the first switch, or may also be connected in parallel to two ends of the second switch. At the initial power-on stage, the first pre-charging unit operates, and pre-charging is performed according to a smaller current at this time to avoid the damage to some components caused by high-voltage shock, thereby improving the reliability of vehicle charging.

In some embodiments, the first pre-charging unit includes a third switch and a first resistor, and the third switch is connected in series with the first resistor, where the first pre-charging unit is configured to control the first charging module to enter a pre-charging mode when the third switch is in a switched-on state, and/or control the first charging module to exit the pre-charging mode when the third switch is in a switched-off state.

Through the above technical means, the third switch is connected in series with the first resistor. The first resistor here has a larger resistance value as a pre-charging resistor. When the third switch is switched on, the charging current at the initial power-on stage can be reduced due to the presence of the first resistor. At this time, pre-charging is performed according to a smaller current to avoid the damage to some components caused by high-voltage shock, thereby improving the reliability of vehicle charging.

In some embodiments, the first charging module further includes a first protection device, where the first protection device is connected between the first power unit and the first charging interface, and is configured to control the path between the first power unit and the first charging interface to be switched off when the first charging module has a failure.

Through the above technical means, during the process of charging the first device to be charged, if the first charging module has a failure, the path between the first power unit and the first charging interface can be controlled to be switched off through the first protection device, thereby improving the reliability of the first charging module.

In some embodiments, the first protection device includes a first fuse and/or a second fuse, where the first fuse is connected between the positive electrode end of the first power unit and the positive electrode end of the first charging interface; and the second fuse is connected between the negative electrode end of the first power unit and the negative electrode end of the first charging interface.

Through the above technical means, usually, the first fuse is arranged between the positive electrode end of the first power unit and the positive electrode end of the first charging interface, and the second fuse is arranged between the negative electrode end of the first power unit and the negative electrode end of the first charging interface. If the first charging module has a failure, the first fuse and/or the second fuse is disconnected due to an excessive current. Then, when a failure occurs, the first fuse and/or the second fuse can be disconnected to switch off the path between the first power unit and the first charging interface to play a protective role, thereby improving the reliability of the first charging module.

In some embodiments, the first power unit includes an H-bridge circuit composed of four power devices.

Through the above technical means, the first power unit is an H-bridge circuit composed of four power devices, so that the circuit structure of the first charging module is simple, and the cost is low. Moreover, when the three charging modules all use the H-bridge circuit, a variety of connection methods (such as a star connection method and a triangle connection method) on AC sides can be achieved, and the AC grid can charge the three devices to be charged simultaneously. Furthermore, the three devices to be charged can also feed electric energy back to the AC grid together, thereby achieving the vehicle-to-grid (V2G) function.

According to a second aspect, an embodiment of the present application provides a charging method applied to a charging apparatus. The charging apparatus includes three charging modules, and the three charging modules include a first charging module, a second charging module and a third charging module. The charging method includes:

enabling the first charging module to receive a first voltage of an AC grid, convert the first voltage into a first output voltage, and provide the first output voltage to a first device to be charged for charging; enabling the second charging module to receive a second voltage of the AC grid, convert the second voltage into a second output voltage, and provide the second output voltage to a second device to be charged for charging; and enabling the third charging module to receive a third voltage of the AC grid, convert the third voltage into a third output voltage, and provide the third output voltage to a third device to be charged for charging. The first charging module, the second charging module and the third charging module have a one-to-one correspondence relationship with the first device to be charged, the second device to be charged and the third device to be charged. The first voltage, the second voltage and the third voltage have the same frequency and amplitude, with a phase difference of 120 degrees between each two thereof.

Through the above technical means, the three voltages of the AC grid are utilized, the output end of each voltage is connected with one charging module, and the correspondingly connected device to be charged is charged according to the charging module. Specifically, the first charging module receives the first voltage of the AC grid, the second charging module receives the second voltage of the AC grid, and the third charging module receives the third voltage of the AC grid. In this way, the three charging modules can be configured to control the three voltages of the AC grid to charge three devices to be charged (such as electric vehicles) simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus, and reducing the cost. Furthermore, charging three vehicles simultaneously can also ensure the three-phase balance of the AC grid, thereby avoiding the damage to components, and improving the safety of vehicle charging.

In some embodiments, the first charging module includes a first switch unit and a first pre-charging unit, the first switch unit includes a first switch and a second switch, and the first pre-charging unit includes a third switch and a first resistor. When the first pre-charging unit is connected in parallel to two ends of the first switch, the charging method further includes: switching on the second switch and the third switch to enable the first charging module to enter the pre-charging mode when it is detected that three devices to be charged are connected to the charging apparatus simultaneously; and switching on the first switch and switching off the third switch to enable the first charging module to exit the pre-charging mode when it is detected that the charging voltages of the three devices to be charged all meet a preset condition.

Through the above technical means, when it is detected that three devices to be charged are connected to the charging apparatus simultaneously, taking the first charging module as an example, the second switch and the third switch are switched on, indicating that the pre-charging unit in the first charging module starts to operate, that is, the first charging module enters the pre-charging mode. When it is detected that the charging voltages of the three devices to be charged all meet a preset condition, the first switch is switched on and the third switch is switched off, that is, the first charging module exits the pre-charging mode. Therefore, in the pre-charging mode, the damage to some components caused by high-voltage shock can be avoided, and the reliability of vehicle charging is improved. Moreover, after the pre-charging mode is exited, the charging speed of the devices to be charged can also be increased.

In some embodiments, when the first pre-charging unit is connected in parallel to two ends of the second switch, the charging method further includes: switching on the first switch and the third switch to enable the first charging module to enter the pre-charging mode when it is detected that three devices to be charged are connected to the charging apparatus simultaneously; and switching on the second switch and switching off the third switch to enable the first charging module to exit the pre-charging mode when it is detected that the charging voltages of the three devices to be charged all meet a preset condition.

Through the above technical means, when it is detected that three devices to be charged are connected to the charging apparatus simultaneously, taking the first charging module as an example, the first switch and the third switch are switched on, indicating that the pre-charging unit in the first charging module starts to operate, that is, the first charging module enters the pre-charging mode. When it is detected that the charging voltages of the three devices to be charged all meet a preset condition, the second switch is switched on and the third switch is switched off, that is, the first charging module exits the pre-charging mode. Therefore, in the pre-charging mode, the damage to some components caused by high-voltage shock can be avoided, and the reliability of vehicle charging is improved. Moreover, after the pre-charging mode is exited, the charging speed of the devices to be charged can also be increased.

In some embodiments, the charging method further includes: controlling three voltages of the AC grid by power units in the three charging modules to pre-charge the first device to be charged, the second device to be charged and the third device to be charged simultaneously when the three charging modules all enter the pre-charging mode; and controlling the three voltages of the AC grid by the power units in the three charging modules to continue to charge the first device to be charged, the second device to be charged and the third device to be charged simultaneously when the three charging modules all exit the pre-charging mode.

Through the above technical means, when the three charging modules all enter the pre-charging mode, the pre-charging modules in the three charging modules operate, and the power units in the three charging modules can control the AC grid to pre-charge the three devices to be charged, that is, slowly charge the three devices to be charged according to a smaller current. When the three charging modules all exit the pre-charging mode, the pre-charging units in the three charging modules all stop operating, and the power units in the three charging modules can control the AC grid to charge the three devices to be charged, that is, quickly charge the three devices to be charged according to a larger current. Therefore, the damage to some components caused by high-voltage shock can be avoided, the reliability of vehicle charging is improved, and the charging speed of the three devices to be charged is also increased.

In some embodiments, the first charging module includes a first power unit, and the first power unit includes a first power device, a second power device, a third power device and a fourth power device. The enabling the first charging module to receive a first voltage of an AC grid, convert the first voltage into a first output voltage, and provide the first output voltage to a first device to be charged for charging includes: during a positive half cycle of the first voltage, controlling the first power device and the third power device to be in a switched-on state, controlling the second power device and the fourth power device to be in a switched-off state, performing voltage conversion on the first voltage by the first power unit, and providing the obtained first output voltage to the first device to be charged for charging; and during a negative half cycle of the first voltage, controlling the first power device and the third power device to be in a switched-off state, controlling the second power device and the fourth power device to be in a switched-on state, performing voltage conversion on the first voltage by the first power unit, and providing the obtained first output voltage to the first device to be charged for charging.

Through the above technical means, here, the polarity of the voltage applied to the first device to be charged can be switched through four power devices. Specifically, during the positive half cycle, the first power device and the third power device are controlled to be in a switched-on state, the second power device and the fourth power device are controlled to be in a switched-off state, the first power unit converts the first voltage into a first output voltage, and the first output voltage is provided to the first device to be charged for charging; and during the negative half cycle, the first power device and the third power device are controlled to be in a switched-off state, the second power device and the fourth power device are controlled to be in a switched-on state, the first power unit converts the first voltage into a first output voltage, and the first output voltage is provided to the first device to be charged for charging, thereby achieving the DC output of the first charging module. Similarly, the DC output of the second charging module and the third charging module can also be achieved, so that the AC grid can charge the three devices to be charged simultaneously, thereby improving the charging efficiency.

According to a third aspect, an embodiment of the present application provides a charging system. The charging system includes three devices to be charged and the charging apparatus according to the first aspect, and the three devices to be charged include a first device to be charged, a second device to be charged and a third device to be charged, where

the first charging module is connected with the first device to be charged, and is configured to control a first voltage of the AC grid to charge the first device to be charged; the second charging module is connected with the second device to be charged, and is configured to control a second voltage of the AC grid to charge the second device to be charged; and the third charging module is connected with the third device to be charged, and is configured to control a third voltage of the AC grid to charge the third device to be charged.

Through the above technical means, in the charging system, the charging apparatus can charge the three devices to be charged simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus. Compared with the scenario in which multiple vehicles are charged simultaneously in related technologies, the construction expenditure of a charging station can also be reduced, and the cost can be reduced. Furthermore, charging three vehicles simultaneously can also ensure the three-phase balance of the AC grid, thereby avoiding the damage to components, and improving the safety of vehicle charging.

It should be understood that the above general descriptions and the following detailed descriptions are exemplary and explanatory only and are not intended to limit the technical solutions of the present application.

## DESCRIPTION OF DRAWINGS

FIG. 1 is a first schematic diagram of a composition structure of a charging apparatus provided by an embodiment of the present application;
FIG. 2 is a second schematic diagram of a composition structure of a charging apparatus provided by an embodiment of the present application;
FIG. 3 is a third schematic diagram of a composition structure of a charging apparatus provided by an embodiment of the present application;
FIG. 4 is a first schematic diagram of a composition structure of a first charging module provided by an embodiment of the present application;
FIG. 5 is a second schematic diagram of a composition structure of a first charging module provided by an embodiment of the present application;
FIG. 6 is a third schematic diagram of a composition structure of a first charging module provided by an embodiment of the present application;
FIG. 7 is a fourth schematic diagram of a composition structure of a charging apparatus provided by an embodiment of the present application;

FIG. 8 is a first schematic flowchart of a charging method provided by an embodiment of the present application;
FIG. 9 is a second schematic flowchart of a charging method provided by an embodiment of the present application;
FIG. 10 is a schematic diagram of a composition structure of a charging system provided by an embodiment of the present application;
FIG. 11 is a first schematic diagram of a detailed structure of a charging system provided by an embodiment of the present application; and
FIG. 12 is a second schematic diagram of a detailed structure of a charging system provided by an embodiment of the present application.

## DETAILED DESCRIPTION

In order to understand the characteristics and technical content of the embodiments of the present application in more detail, the implementation of the embodiments of the present application will be described in detail below with reference to the accompanying drawings. The attached drawings are for reference only and are not intended to limit the embodiments of the present application.

Unless otherwise defined, all technical and scientific terms used herein have the same meanings as commonly understood by those skilled in the art of the present application. The terms used herein are for the purpose of describing embodiments of the present application only and are not intended to limit the present application.

In the following description, the term "some embodiments" describes subsets of all possible embodiments, but it can be understood that "some embodiments" may be the same subset or different subsets of all possible embodiments, and may be combined with each other without conflict.

It should also be pointed out that the term "first \second\third" involved in the embodiments of the present application is only used to distinguish similar objects, and does not represent a particular order for the objects. It can be understood that the "first\second\third" may be interchanged in a particular order or sequence if allowed, so that the embodiments of the present application described herein may be implemented in an order other than those illustrated or described herein.

In addition, the reference to "embodiments" herein means that specific features, structures or characteristics described in combination with the embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

The following is an introduction to the related technologies of the present application.

New energy batteries are increasingly applied in life and industry. For example, new energy vehicles equipped with batteries have been widely used. In addition, batteries are increasingly used in the fields of energy storage and the like.

At present, new energy batteries are increasingly applied in life and industry. New energy batteries are not only applied in energy storage power supply systems such as water power, fire power, wind power, and solar power stations, but also widely applied in electric transportation tools, such as electric bicycles, electric motorcycles and electric cars, as well as many fields, such as aerospace. With the continuous expansion of the application field of power batteries, the market demand is also constantly expanding.

In the embodiments of the present application, a battery may be a battery cell. The battery cell refers to a basic unit that can achieve mutual conversion between chemical energy and electric energy, and can be used for manufacturing a battery module or a battery pack, thereby supplying power to an electrical apparatus. The battery cell may be a secondary battery, and the secondary battery refers to a battery cell that can be used continually by activating an active material in the manner of charging after the battery cell is discharged. The battery cell may be a lithium-ion battery, a sodium-ion battery, a sodium/-lithium-ion battery, a lithium metal battery, a sodium metal battery, a lithium-sulfur battery, a magnesium-ion battery, a nickel-hydrogen battery, a nickelcadmium battery, a lead storage battery, or the like, which is not limited in the embodiments of the present application.

In the embodiments of the present application, the battery may also be a single physical module including one or a plurality of battery cells to provide a higher voltage and capacity. When a plurality of battery cells are provided, the plurality of battery cells are connected in series, in parallel or in series and parallel through bus components.

Electric vehicles (especially electric cars) refer to vehicles that use vehicle-mounted power sources as power, use motors to drive wheels to run, and comply with all requirements of road traffic and safety regulations. Because the impact of electric vehicles on the environment is smaller than that of traditional cars, the prospects of electric vehicles are widely optimistic, but the current technology is not yet mature. The battery performance and charging technology of electric vehicles are main factors restricting the development of electric vehicles.

In related technologies, due to defects of devices in current electric vehicle charging stations, when the number of electric vehicles exceeds the number of charging piles, especially when the number of electric vehicles increases, the congestion on highways, especially in highway service areas, will be caused due to slow charging of electric vehicles. In order to solve this problem, it is necessary to configure multiple charging piles, which increases the construction expenditures of electric vehicle charging stations and leads to increased costs. In order to save construction expenditures, charging stations generally have a limited number of charging piles, which may result in electric vehicles queuing for charging, thus reducing the charging efficiency.

Based on this, embodiments of the present application provide a charging apparatus, a charging method and a charging system. The charging apparatus includes three charging modules, and the three charging modules can be configured to control three voltages of an AC grid to charge three devices to be charged simultaneously. Specifically, the first charging module receives a first voltage of the AC grid, the second charging module receives a second voltage of the AC grid, and the third charging module receives a third voltage of the AC grid. Moreover, the first voltage, the second voltage and the third voltage have the same frequency and amplitude, with a phase difference of 120 degrees between each two thereof. In this way, the charging apparatus can charge the three devices to be charged simultaneously, thereby avoiding the situation that electric vehicles have to queue for charging, and improving the charging efficiency. In addition, here, the three charging modules are respectively connected with the three voltages of the AC grid, and the phase difference between each two of the three voltages is 120 degrees, thereby simplifying the circuit structure of the charging apparatus. Compared with the scenario in which multiple vehicles are charged simultaneously in related technologies, the construction expenditure of a charging station can also be reduced, and the cost can be reduced. Furthermore, charging three vehicles simultaneously can also ensure the three-phase balance of the AC grid, thereby avoiding the damage to components, and improving the safety of vehicle charging.

The present application will be described in detail below according to accompanying drawings and specific embodiments.

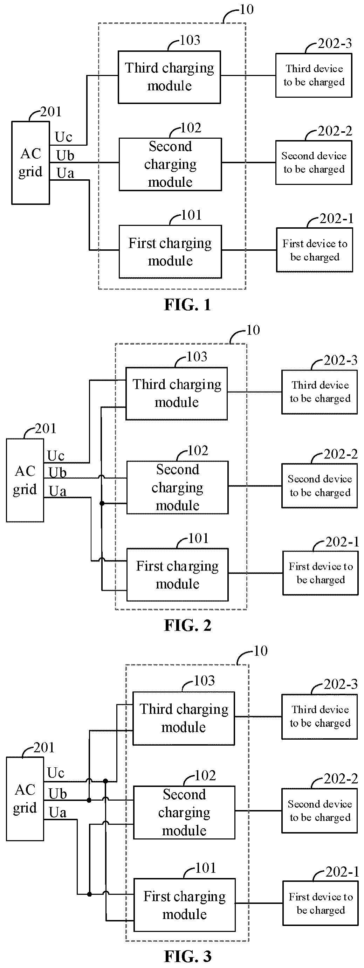

In one embodiment of the present application, FIG. 1 is a first schematic diagram of a composition structure of a charging apparatus provided by an embodiment of the present application. As shown in FIG. 1, the charging apparatus 10 may include three charging modules, and the three charging modules include a first charging module 101, a second charging module 102 and a third charging module 103, where

the first charging module 101 is configured to receive a first voltage of an AC grid 201, convert the first voltage into a first output voltage, and provide the first output voltage to a first device 202-1 to be charged for charging;
the second charging module 102 is configured to receive a second voltage of the AC grid 201, convert the second voltage into a second output voltage, and provide the second output voltage to a second device 202-2 to be charged for charging; and

the third charging module 103 is configured to receive a third voltage of the AC grid 201, convert the third voltage into a third output voltage, and provide the third output voltage to a third device 202-3 to be charged for charging.

In the embodiment of the present application, the first charging module 101, the second charging module 102 and the third charging module 103 have a one-to-one correspondence relationship with the first device 202-1 to be charged, the second device 202-2 to be charged and the third device 202-3 to be charged, where the first charging module 101 is correspondingly connected with the first device 202-1 to be charged, the second charging module 102 is correspondingly connected with the second device 202-2 to be charged, and the third charging module 103 is correspondingly connected with the third device 202-3 to be charged. In addition, the first voltage, the second voltage and the third voltage have the same frequency and amplitude, with a phase difference of 120 degrees between each two thereof; and the three charging modules are configured to control the three voltages of the AC grid 201 to charge the first device 202-1 to be charged, the second device 202-2 to be charged and the third device 202-3 to be charged simultaneously.

In the embodiment of the present application, the charging apparatus 10 may be a charging pile, which has a function similar to that of a fuel dispenser in a gas station. The charging apparatus 10 may be fixed on the ground or on a wall or installed in parking lots or charging stations in public buildings and residential communities, and may also charge various types of devices to be charged according to different voltage levels. Exemplarily, an input end of the charging pile is directly connected with the AC grid, and an output end of the charging pile may be connected with multiple devices to be charged (such as the first device 202-1 to be charged, the second device 202-2 to be charged and the third device 202-3 to be charged) for charging the multiple devices to be charged. The device to be charged may be a new energy electric car or other electrical devices.

In the embodiment of the present application, the AC grid 201 may be a three-phase AC power that is specifically composed of three AC powers with the same frequency, equal amplitude and a phase difference of 120°, which may usually be represented by a phase A, a phase B and a phase C. For the phase A, the phase B and the phase C, the voltage of each phase may be referred to as a phase voltage, and the voltage between any two phases is referred to as a line voltage.

In the embodiment of the present application, the three voltages of the AC grid 201 may refer to phase voltages of the three phases A, B and C, or may refer to line voltages among the three phases A, B and C. Here, whether there are three phase voltages or three line voltages, they may be regarded as consisting of three AC powers with the same frequency and amplitude and a phase difference of 120 degrees.

In the embodiment of the present application, here, the three voltages of the AC grid 201 are utilized, the output end of each voltage is connected with one charging module, and the correspondingly connected device to be charged is charged according to the charging module. In this way, because the phase difference between each two of the three voltages is 120 degrees, based on the phase sequence among the three voltages, the three charging modules can control the three voltages of the AC grid to charge the three devices to be charged simultaneously. Specifically, the first charging module 101 receives the first voltage of the AC grid 201, the second charging module 102 receives the second voltage of the AC grid 201, and the third charging module 103 receives the third voltage of the AC grid 201, so that the charging apparatus 10 can charge the three devices to be charged simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus, and reducing the cost. Furthermore, charging three vehicles simultaneously can also ensure the three-phase balance of the AC grid, thereby avoiding the damage to components, and improving the safety of vehicle charging.

In the embodiment of the present application, the three-phase balance of the AC grid 201 may mean that the voltages of the three phases must be sine waves with the same frequency and amplitude and a phase difference of 120 degrees; and the currents of the three phases are all sine waves with the same frequency and amplitude and a phase difference of 120 degrees. In practical applications, absolute three-phase balance does not exist. Generally speaking, the three-phase balance means that the voltage parameters of the three phases all meet a preset range, and the current parameters of the three phases all meet a preset range. In this case, it can be considered that the three-phase balance is met.

In the embodiment of the present application, considering the three-phase balance of the AC grid 201, the three charging modules here have the same charging power and are configured to control the AC grid 201 to charge the three devices to be charged simultaneously. That is to say, when there are many vehicles waiting to be charged, the charging apparatus 10 in the embodiment of the present application can charge three electric vehicles, three electric vehicles, etc. simultaneously, thereby saving the waiting time and improving the charging efficiency. In addition, it should be noted that the charging power of the three electric vehicles remains consistent when they are charged simultaneously, thereby ensuring the balance of the three phases, and avoiding the shortened service life of the back-end device to be charged, accelerated replacement frequency of device components and even component burning caused by imbalance among the three phases, as well as increased line loss caused by imbalance among the three phases.

In some embodiments, based on the charging apparatus 10 shown in FIG. 1, referring to FIG. 2, the connection relationship between the AC grid 201 and the three charging modules may include: a first input end of the first charging module 101 is connected with a first phase line of the AC grid 201; a first input end of the second charging module 102 is connected with a second phase line of the AC grid 201; a first input end of the third charging module 103 is connected with a third phase line of the AC grid 201; and a second input end of the first charging module 101 is respectively connected with a second input end of the second charging module 102 and a second input end of the third charging module 103.

In the embodiment of the present application, the connection method shown in FIG. 2 may be referred to as a star connection method. In this case, the first voltage of the AC grid 201 is the phase voltage of the phase A (represented by Ua), the second voltage of the AC grid 201 is the phase voltage of the phase B (represented by Ub), and the third voltage of the AC grid 201 is the phase voltage of the phase C (represented by Uc).

In the embodiment of the present application, for the first charging module 101, the second charging module 102 and the third charging module 103, a star connection method is adopted between the three charging modules and the AC grid, and the connection method is simple. Moreover, the received three voltages (namely three paths of phase voltage) have the same frequency and amplitude, with a phase difference of 120 degrees between each two thereof, so that the AC grid 201 can be controlled to charge the three devices to be charged simultaneously. Furthermore, the three-phase balance of the AC grid is ensured during the charging process, thereby improving the charging efficiency.

In some embodiments, based on the charging apparatus 10 shown in FIG. 1, referring to FIG. 3, the connection relationship between the AC grid 201 and the three charging modules may include: a first input end of the first charging module 101 is connected with a first phase line of the AC grid 201, and a second input end of the first charging module 101 is connected with a third phase line of the AC grid 201; a first input end of the second charging module 102 is connected with a second phase line of the AC grid 201, and a second input end of the second charging module 102 is connected with the first phase line of the AC grid 201; and a first input end of the third charging module 103 is connected with the third phase line of the AC grid 201, and a second input end of the third charging module 103 is connected with the second phase line of the AC grid 201.

In the embodiment of the present application, the connection method shown in FIG. 3 may be referred to as a triangle connection method (or referred to as a "delta form connection method"). In this case, the first voltage of the AC grid 201 is the line voltage between the phase A and the phase C (represented by Uac), the second voltage of the AC grid 201 is the line voltage between the phase B and the phase A (represented by Uba), and the third voltage of the AC grid 201 is the line voltage between the phase C and the phase B (represented by Ucb).

In the embodiment of the present application, the phase voltage refers to the voltage between any phase line (such as the phase A, the phase B or the phase C) and a null line, the three-phase AC power has three phase voltages, and the three phase voltages have the same voltage amplitude and frequency and a phase difference of 120 degrees. In the embodiment of the present application, the voltage between any two phase lines is referred to as the line voltage. The three-phase AC power also has three line voltages, and the three line voltages have the same voltage amplitude and frequency and a phase difference of 120 degrees.

The relationship between the line voltage and the phase voltage is: the line voltage is equal to $\sqrt{3}$ times the phase voltage. Exemplarily, if the phase voltage is 220 V, the line voltage is 380 V.

That is to say, in the embodiment of the present application, for the first charging module 101, the second charging module 102 and the third charging module 103, a triangle connection method is adopted between the three charging modules and the AC grid. According to this connection method, the three voltages (namely three paths of line voltage) received by the three charging modules have the same frequency and amplitude, and the phase difference is also 120 degrees, so that the AC grid 201 can be controlled to charge the three devices to be charged simultaneously, and the three-phase balance of the AC grid can be ensured during the charging process. In addition, the three voltages under the triangle connection method are higher than the three voltages under the star connection method. Compared with the star connection method, the triangle connection method can provide higher charging power, thereby further improving the charging efficiency.

In some embodiments, the first charging module 101, the second charging module 102 and the third charging module 103 have the same circuit structure. Moreover, considering the three-phase balance of the AC grid, the three charging modules have the same charging power to charge the three devices to be charged simultaneously.

In the embodiment of the present application, the three charging modules have the same circuit structure, and the internal circuit structure is described below by taking the first charging module 101 as an example.

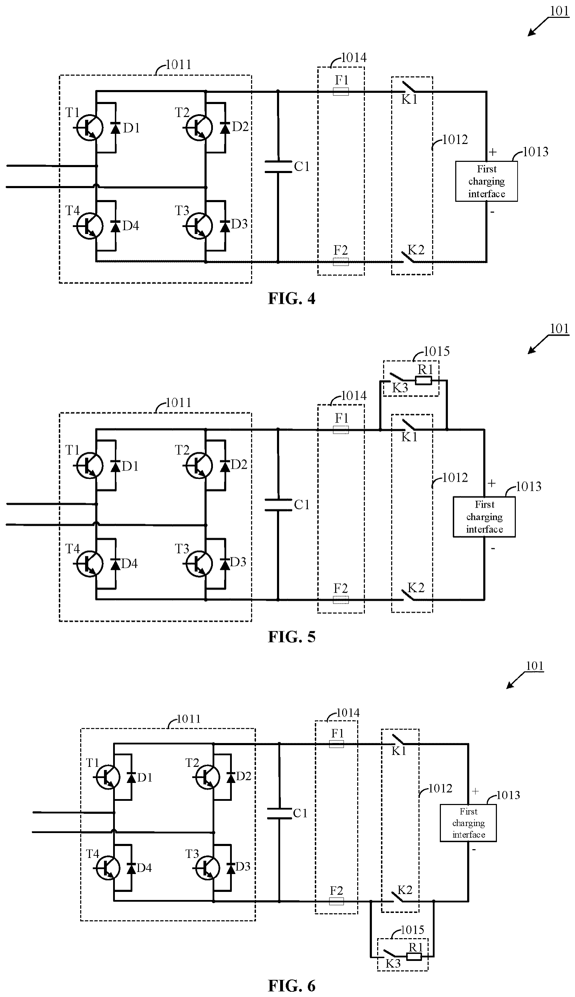

In some embodiments, referring to FIG. 4, the first charging module 101 may include a first power unit 1011, a first switch unit 1012 and a first charging interface 1013. The first switch unit 1012 is connected between the first power unit 1011 and the first charging interface 1013, and the first charging interface 1013 is configured to connect the first device 202-1 to be charged.

In the embodiment of the present application, the first switch unit 1012 is connected between the first power unit 1011 and the first charging interface 1013, and can be configured to control the path between the first power unit 1011 and the first charging interface 1013 to be switched on or switched off.

Exemplarily, before the first device 202-1 to be charged is connected to the first charging interface 1013, the first switch unit 1012 is in a switched-off state, and then, the path between the first power unit 1011 and the first charging interface 1013 is switched off, thereby avoiding the phenomenon of electric shock when a user manually connects the first device 202-1 to be charged to the first charging interface 1013, and reducing the harm to personal safety.

In this way, in the embodiment of the present application, because the first switch unit 1012 is connected between the first power unit 1011 and the first charging interface 1013, the path between the first power unit 1011 and the first charging interface 1013 can be controlled to be switched on or switched off by switching on or switching off the first switch unit 1012. In this way, before the first device 202-1 to be charged is connected to the first charging interface 1013, the first switch unit 1012 is in a switched-off state, thereby avoiding the phenomenon of electric shock when a user manually connects the first device to be charged to the first charging interface 1013, and reducing the harm to personal safety.

In some embodiments, still referring to FIG. 4, the first switch unit 1012 may include a first switch K1 and/or a second switch K2, where

the first switch K1 is connected between a positive electrode end of the first power unit 1011 and a positive electrode end of the first charging interface 1013; and
the second switch K2 is connected between a negative electrode end of the first power unit 1011 and a negative electrode end of the first charging interface 1013.

In the embodiment of the present application, as shown in FIG. 4, the first switch K1 is connected between the positive electrode end of the first power unit 1011 and the positive electrode end of the first charging interface 1013, so the first switch K1 may also be referred to as a "positive side switch"; and the second switch K2 is connected between the negative electrode end of the first power unit 1011 and the negative electrode end of the first charging interface 1013, so the second switch K2 may also be referred to as a "negative side switch".

In the embodiment of the present application, as shown in FIG. 4, when the first switch unit 1012 includes a first switch K1 and a second switch K2, the first switch K1 and the second switch K2 may be configured to operate independently. For example, the first switch K1 is in a switched-on state, and the second switch K2 is in a switched-off state; or, the first switch K1 is in a switched-off state, and the second switch K2 is in a switched-on state; or, the first switch K1 is in a switched-off state, and the second switch K2 is in a switched-off state. Details are not specifically limited here.

In the embodiment of the present application, because the first switch K1 is connected between the positive electrode end of the first power unit 1011 and the positive electrode end of the first charging interface 1013, and the second switch K2 is connected between the negative electrode end of the first power unit 1011 and the negative electrode end of the first charging interface 1013, the path between the first power unit 1011 and the first charging interface 1013 can be controlled to be switched on or switched off by switching on or switching off the first switch K1 and/or the second switch K2. In this way, before the first device 202-1 to be charged is connected to the first charging interface 1013, the first switch K1 and the second switch K2 are both in a switched-off state, thereby avoiding the phenomenon of electric shock when a user manually connects the first device to be charged to the first charging interface 1013, and reducing the harm to personal safety.

In some embodiments, still referring to FIG. 4, the first charging module 101 may further include a first protection device 1014, where
the first protection device 1014 is connected between the first power unit 1011 and the first charging interface 1013, and is configured to control the path between the first power unit 1011 and the first charging interface 1013 to be switched off when the first charging module 101 has a failure.

In the embodiment of the present application, the first protection device 1014 may be a fuse, a fuse protector, etc. In this way, during the process of charging the first device 202-1 to be charged, if the first charging module 101 has a failure, the path between the first power unit 1011 and the first charging interface 1013 can be controlled to be switched off through the first protection device 1014, thereby improving the reliability of the first charging module.

In some embodiments, taking a fuse as an example, still referring to FIG. 4, the first protection device 1014 may include a first fuse F1 and/or a second fuse F2, where

the first fuse F1 is connected between the positive electrode end of the first power unit 1011 and the positive electrode end of the first charging interface 1013; and
the second fuse F2 is connected between the negative electrode end of the first power unit 1011 and the negative electrode end of the first charging interface 1013.

In the embodiment of the present application, as shown in FIG. 4, the first fuse F1 is connected between the positive electrode end of the first power unit 1011 and the positive electrode end of the first charging interface 1013, so the first fuse F1 may also be referred to as a "positive side fuse"; and the second fuse F1 is connected between the negative electrode end of the first power unit 1011 and the negative electrode end of the first charging interface 1013, so the second fuse F1 may also be referred to as a "negative side fuse".

In the embodiment of the present application, in order to improve the reliability, usually, the first fuse F1 is arranged between the positive electrode end of the first power unit 1011 and the positive electrode end of the first charging interface 1013, and the second fuse F2 is arranged between the negative electrode end of the first power unit 1011 and the negative electrode end of the first charging interface 1013. If the first charging module 101 has a failure, the first fuse F1 and/or the second fuse F2 is disconnected due to an excessive current. Then, when a failure occurs, the first fuse F1 and/or the second fuse F2 can be disconnected to switch off the path between the first power unit 1011 and the first charging interface 1013 to play a protective role, thereby improving the reliability of the first charging module.

In some embodiments, based on the charging apparatus 10 shown in FIG. 4, referring to FIG. 5 or FIG. 6, the first charging module 101 may further include a first pre-charging unit 1015. The first pre-charging unit 1015 is configured to control whether the first charging module 101 enters the pre-charging mode.

In the embodiment of the present application, pre-charging is a charging process that provides a smaller current to a battery before the battery officially starts the charging process. The main purpose of this process is to optimize the performance of the battery, prolong the battery life, protect the battery, and improve the charging efficiency. Pre-charging is particularly important at the early stage of the life cycle of the battery, especially when the battery is charged for the first time, because pre-charging can help the battery reach an optimal charging state.

In addition, in new energy electric cars, pre-charging is also an indispensable high-voltage safety link. The function of pre-charging is to charge according to a smaller current at the initial power-on stage, which can reduce the spark arcing generated when a high-voltage relay is switched on to avoid the damage to some components caused by high-voltage shock, thereby improving the safety of vehicle charging.

In a possible implementation, as shown in FIG. 5, the first pre-charging unit 1015 is connected in parallel to two ends of the first switch K1. Alternatively, in another possible implementation, as shown in FIG. 6, the first pre-charging unit 1015 is connected in parallel to two ends of the second switch K2.

In the embodiment of the present application, when the first pre-charging unit 1015 is connected in parallel to two ends of the first switch K1, if the first pre-charging unit 1015 operates, the first switch K1 is switched off at this time. On the contrary, when the first pre-charging unit 1015 is connected in parallel to two ends of the second switch K2, if the first pre-charging unit 1015 operates, the second switch K2 is switched off at this time.

That is to say, in the embodiment of the present application, the first pre-charging unit 1015 may be connected in parallel to two ends of the first switch K1, or may also be connected in parallel to two ends of the second switch K2. At the initial power-on stage, the first pre-charging unit 1015 operates, and pre-charging is performed according to a smaller current at this time to avoid the damage to some components caused by high-voltage shock, thereby improving the reliability of vehicle charging.

In some embodiments, still referring to FIG. 5 or FIG. 6, the first pre-charging unit 1015 includes a third switch K3 and a first resistor R1, and the third switch K3 is connected in series with the first resistor R1, where the first pre-charging unit 1015 is configured to control the first charging module 101 to enter a pre-charging mode when the third switch K3 is in a switched-on state, and/or control the first charging module 101 to exit the pre-charging mode when the third switch K3 is in a switched-off state.

In the embodiment of the present application, whether the first pre-charging unit 1015 operates is controlled according to the switching-on and switching-off of the third switch K3, thereby controlling whether the first charging module 101 enters the pre-charging mode. Exemplarily, at the initial power-on stage when the first device 202-1 to be charged is connected to the first charging module 101, the third switch K3 is switched on, indicating that the first pre-charging unit 105 operates, that is, the first charging module 101 enters the pre-charging mode. At this time, the first power unit 1011 can control the AC grid 201 to pre-charge the first device 202-1 to be charged, that is, slowly charge the first device 202-1 to be charged according to a smaller current. When the charging voltage of the first device 202-1 to be charged meets preset conditions (for example, the charging voltage reaches a preset value, or the charging time reaches a preset time), the third switch K3 is switched off at this time, indicating that the first pre-charging unit 105 stops operating, that is, the first charging module 101 exits the pre-charging mode. At this time, the first power unit 1011 can control the AC grid 201 to charge the first device 202-1 to be charged, that is, quickly charge the first device 202-1 to be charged according to a larger current.

In this way, in the embodiment of the present application, the third switch K3 is connected in series with the first resistor R1. The first resistor R1 here has a larger resistance value as a pre-charging resistor. When the third switch K3 is switched on, the charging current at the initial power-on stage can be reduced due to the presence of the first resistor R1. At this time, pre-charging is performed according to a smaller current to avoid the damage to some components caused by high-voltage shock, thereby improving the reliability of vehicle charging.

It can be understood that in the embodiment of the present application, the first switch K1, the second switch K2 and the third switch K3 may be mechanical switches (such as knife switches), or may be relays, or may be semiconductor devices such as switch tubes, triodes, transistors, and metal-oxide-semiconductor field-effect transistors (MOSFET or referred to as MOS transistors), and no limitation is made here.

In some embodiments, as shown in FIG. 4, FIG. 5 or FIG. 6, the first power unit 1011 may include a first power device T1, a second power device T2, a third power device T3 and a fourth power device T4. That is to say, the first power unit 1011 includes an H-bridge circuit composed of four power devices.

In the embodiment of the present application, the first power device T1 and the fourth power device T4 are connected in series, and the first input end of the first charging module 101 is led out on a series branch of the first power device T1 and the fourth power device T4; the second power device T2 and the third power device T3 are connected in series, and the second input end of the first charging module 101 is led out on a series branch of the second power device T2 and the third power device T3; and the first end of the first power device T1 is connected with the first end of the second power device T2, and the second end of the fourth power device T4 is connected with the second end of the third power device T3.

In the embodiment of the present application, taking the first charging module 101 as an example, according to the operating states of the four power devices (the first power device T1, the second power device T2, the third power device T3 and the fourth power device T4), the AC grid can charge the three devices to be charged simultaneously, and the three devices to be charged can also feed electric energy back to the AC grid together, thereby achieving the vehicle-to-grid (V2G) function.

In some embodiments, the charging apparatus 10 may further include a control module, and the control module is configured to send a driving signal to the four power devices, where the driving signal is used for controlling the corresponding power device to be switched on or switched off. Exemplarily, if the driving signal is at a high level, the corresponding power device is switched on; and if the driving signal is at a low level, the corresponding power device is switched off.

Exemplarily, the control module sends a first driving signal to the first power device T1, and controls the first power device T1 to be switched on or switched off according to the level state (for example, low level and high level) of the first driving signal; the control module sends a second driving signal to the second power device T2, and controls the second power device T2 to be switched on or switched off according to the level state of the second driving signal; the control module sends a third driving signal to the third power device T3, and controls the third power device T3 to be switched on or switched off according to the level state of the third driving signal; and the control module sends a fourth driving signal to the fourth power device T4, and controls the fourth power device T4 to be switched on or switched off according to the level state of the fourth driving signal.

In the embodiment of the present application, taking the charging of the first device to be charged by the AC grid as an example, during the positive half cycle of the first voltage of the AC grid 201, the first power device T1 and the third power device T3 are controlled to be in a switched-on state, the second power device T2 and the fourth power device T4 are controlled to be in a switched-off state, the first power unit 1011 performs voltage conversion on the first voltage, and an obtained first output voltage is provided to the first device 202-1 to be charged for charging; and during the negative half cycle of the first voltage of the AC grid 201, the first power device T1 and the third power device T3 are controlled to be in a switched-off state, the second power device T2 and the fourth power device T4 are controlled to be in a switched-on state, the first power unit 1011 performs voltage conversion on the first voltage, and an obtained first output voltage is provided to the first device 202-1 to be charged for charging. Here, the first voltage of the AC grid 201 is an AC voltage, and the obtained first output voltage is a DC voltage. That is, the voltage conversion during the charging process is AC to DC conversion, such as an alternating current/direct current (AC/DC) converter.

In the embodiment of the present application, taking the feedback of electric energy from the first device to be charged to the AC grid as an example, first, the first power device T1 and the third power device T3 are controlled to be in a switched-on state, the second power device T2 and the fourth power device T4 are controlled to be in a switched-off state, the first power unit 1011 performs voltage conversion on a DC voltage provided by the first device to be charged, and an obtained positive half cycle voltage is fed back to the AC grid 201; and then, the first power device T1 and the third power device T3 are controlled to be in a switched-off state, the second power device T2 and the fourth power device T4 are controlled to be in a switched-on state, the first power unit 1011 performs voltage conversion on a DC voltage provided by the first device to be charged, and an obtained negative half cycle voltage is fed back to the AC grid 201. The voltage conversion during the process of feeding the electric energy back to the AC grid is inverse conversion from DC to AC.

That is to say, in the embodiment of the present application, the first power unit 1011 is an H-bridge circuit composed of four power devices, so that the circuit structure of the first charging module 101 is simple, and the cost is low. Moreover, when the three charging modules all use the H-bridge circuit, a variety of connection methods (such as a star connection method and a triangle connection method) on AC sides can be achieved, and the AC grid can charge the three devices to be charged simultaneously. Furthermore, the three devices to be charged can also feed electric energy back to the AC grid together, thereby achieving the V2G function.

It can also be understood that in the embodiment of the present application, the power devices here may be switch tubes, triodes, transistors, insulate-gate bipolar transistors (IGBT), and metal-oxide-semiconductor field-effect transistors (MOSFET or referred to as MOS transistors), and no limitation is made here.

It can also be understood that in the embodiment of the present application, the second charging module 102 and the third charging module 103 have the same circuit structure as the first charging module 101, that is, the three charging modules all use the H-bridge circuit, so that the circuit structure can be simplified, and the cost can be reduced. In addition, the three charging modules all use the H-bridge circuit, and a star connection method or a triangle connection method can also be implemented on an input side, so that the AC grid 201 can be controlled to charge the three devices to be charged simultaneously. Furthermore, the three-phase balance of the AC grid is ensured during the charging process, thereby improving the charging efficiency.

In some embodiments, as shown in FIG. 4, FIG. 5 or FIG. 6, the first charging module 101 may further include a first capacitor C1, and the first capacitor C1 is connected in parallel to two ends of the first power unit 1011.

In the embodiment of the present application, the first capacitor C1 can play roles in energy storage, filtering and voltage stabilization, and can also improve the quality of electric energy and reduce the electromagnetic interference and noise emitted by the charging apparatus 10, thereby improving the operating stability of the charging apparatus 10.

In some embodiments, as shown in FIG. 4, FIG. 5 or FIG. 6, the first power unit 1011 may further include a first diode D1, a second diode D2, a third diode D3 and a fourth diode D4. The first diode D1 is connected in parallel at the first end and second end of the first power device T1, the second diode D2 is connected in parallel at the first end and second end of the second power device T2, the third diode D3 is connected in parallel at the first end and second end of the third power device T3, and the fourth diode D4 is connected in parallel at the first end and second end of the fourth power device T4.

In the embodiment of the present application, whether it is the first diode D1, the second diode D2 or the third diode D3 and the fourth diode D4, they may be integrated inside the corresponding power devices, that is, they are internal diodes of the corresponding power devices. For example, the first diode D1 is the internal diode of the first power device T1, the second diode D2 is the internal diode of the second power device T2, the third diode D3 is the internal diode of the third power device T3, and the fourth diode D4 is the internal diode of the fourth power device T4. Alternatively, they may be separately arranged from the corresponding power devices, that is, they are independent elements. For example, the first diode D1 is independently arranged from the first power device T1, the second diode D2 is independently arranged from the second power device T2, the third diode D3 is independently arranged from the third power device T3, and the fourth diode D4 is independently arranged from the fourth power device T4. No limitation is made here.

It can also be understood that in the embodiment of the present application, if the grid voltage of the AC grid 201 is too large and is not suitable for the input of the charging apparatus 10, the grid voltage of the AC grid 201 can also be transformed, and the transformed three-phase AC power can be used as the input of the charging apparatus 10.

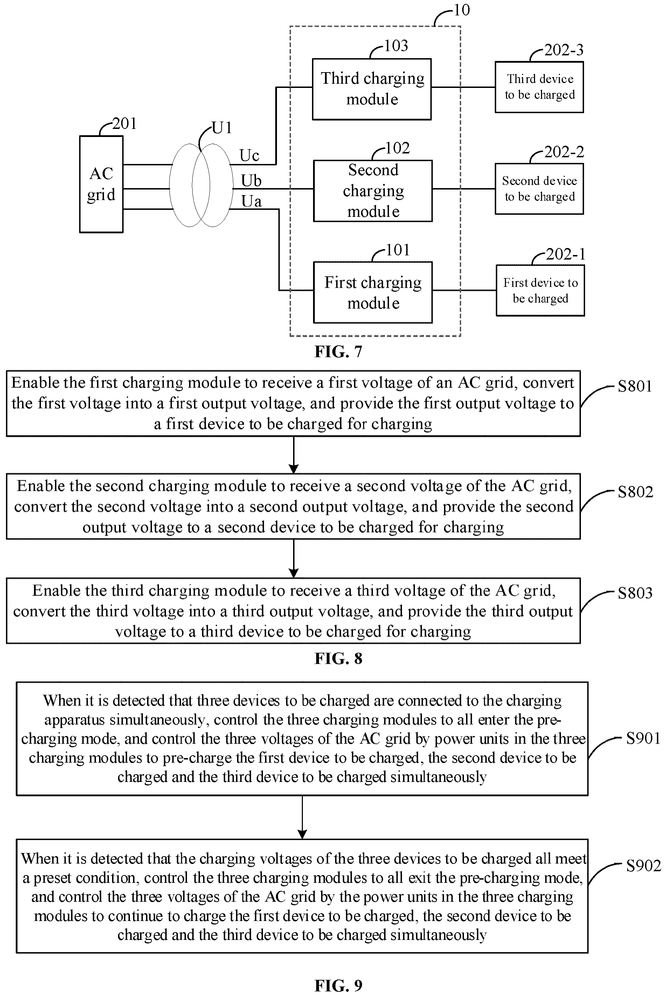

In some embodiments, based on the charging apparatus 10 shown in FIG. 1, referring to FIG. 7, the charging apparatus 10 may further include a first transformer U1, where an input end of the first transformer U1 is the AC grid 201, and an output end of the first transformer U1 is connected with the input ends of the three charging modules.

In the embodiment of the present application, the first transformer U1 may be a three-phase industrial frequency transformer which has the function of transforming the voltage of the AC grid into the three-phase AC power required by the charging apparatus 10. Exemplarily, the voltage of the AC grid is 500 kV, 220 kV, 110 kV, 35 kV, 10 kV, 6 kV, 3 kV, etc., which can be converted into 380 V three-phase AC power through the first transformer U1.

In the embodiment of the present application, the charging apparatus 10 can support high-power quick charging. That is to say, compared with the single-phase AC power in related technologies, the three-phase AC power here can provide a greater charging capacity, thereby increasing the charging speed.

In some embodiments, the charging apparatus 10 may further include an energy storage module, where the energy storage module is connected with the first device 202-1 to be charged through a first charging interface at the output end of the first charging module 101, the energy storage module is connected with the second device 202-2 to be charged through a second charging interface at the output end of the second charging module 102, and the energy storage module is connected with the third device 202-3 to be charged through a third charging interface at the output end of the third charging module 103.

In the embodiment of the present application, only one energy storage element may be arranged in the energy storage module, or a plurality of energy storage elements may be arranged in the energy storage module. The energy storage elements may have various forms. Exemplarily, the energy storage elements may include batteries, super-capacitors, flywheel energy storage elements, gas compression energy storage elements or any combination thereof. In addition, other devices known in the art that can store electric energy, such as second-life batteries, can also be selected. Those skilled in the art can make a choice from these devices according to actual needs.

In a specific embodiment, the energy storage element may be a battery, and the energy storage module may be composed of one or more batteries connected in series and parallel. In this case, the energy storage module may also be referred to as a battery module.

In the embodiment of the present application, in the process of controlling the AC grid 201 to charge the three devices to be charged simultaneously through the three charging modules (namely the first charging module 101, the second charging module 102 and the third charging module 103), the electric energy provided by the energy storage module and the electric energy provided by the AC grid can also be provided together to the three devices to be charged for simultaneous charging. In this way, the embodiment of the present application can achieve simultaneous power supply to the three devices to be charged by the AC grid and the energy storage module. Compared with the method of charging the three devices to be charged only by the AC grid 201 in the above embodiment, the method of simultaneously supplying power by the AC grid and the energy storage module in the embodiment of the present application can provide higher charging power to the three devices to be charged, so as to further shorten the charging time and improve the charging efficiency, thereby achieving the quick charging or super charging function.

An embodiment of the present application provides a charging apparatus. The first charging module 101 receives a first voltage of the AC grid, the second charging module 102 receives a second voltage of the AC grid, and the third charging module 102 receives a third voltage of the AC grid. Moreover, the first voltage, the second voltage and the third voltage have the same frequency and amplitude, with a phase difference of 120 degrees between each two thereof. In this way, the charging apparatus can charge the three devices to be charged simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus. Compared with the scenario in which multiple vehicles are charged simultaneously in related technologies, the construction expenditure of a charging station can also be reduced, and the cost can be reduced.

Furthermore, charging three vehicles simultaneously can also ensure the three-phase balance of the AC grid, thereby avoiding the damage to components, and improving the safety of vehicle charging.

In another embodiment of the present application, FIG. 8 is a first schematic flowchart of a charging method provided by an embodiment of the present application. As shown in FIG. 8, the charging method includes:

S801: The first charging module receives the first voltage of the AC grid, converts the first voltage into a first output voltage, and provides the first output voltage to the first device to be charged for charging.

S802: The second charging module receives the second voltage of the AC grid, converts the second voltage into a second output voltage, and provides the second output voltage to the second device to be charged for charging.

S803: The third charging module receives the third voltage of the AC grid, converts the third voltage into a third output voltage, and provides the third output voltage to the third device to be charged for charging.

In the embodiment of the present application, the first voltage, the second voltage and the third voltage have the same frequency and amplitude, with a phase difference of 120 degrees between each two thereof. In addition, the charging method is applied to a charging apparatus. The charging apparatus includes three charging modules, and the three charging modules include a first charging module, a second charging module and a third charging module. The first charging module, the second charging module and the third charging module have a one-to-one correspondence relationship with the first device to be charged, the second device to be charged and the third device to be charged. Moreover, the three charging modules are configured to control the three voltages of the AC grid to charge the first device to be charged, the second device to be charged and the third device to be charged simultaneously.

In the embodiment of the present application, the AC grid may be a three-phase AC power that is specifically composed of three AC powers with the same frequency, equal amplitude and a phase difference of 120°, which may usually be represented by a phase A, a phase B and a phase C. For the phase A, the phase B and the phase C, the voltage of each phase may be referred to as a phase voltage, and the voltage between any two phases is referred to as a line voltage.

In the embodiment of the present application, the three voltages of the AC grid may refer to phase voltages of the three phases A, B and C, or may refer to line voltages among the three phases A, B and C. Here, whether there are three phase voltages or three line voltages, they may be regarded as consisting of three AC powers with the same frequency and amplitude and a phase difference of 120 degrees.

In the embodiment of the present application, here, the three voltages of the AC grid are utilized, the output end of each voltage is connected with one charging module, and the correspondingly connected device to be charged is charged according to the charging module. Specifically, the first charging module receives the first voltage of the AC grid, the second charging module receives the second voltage of the AC grid, and the third charging module receives the third voltage of the AC grid. In this way, the three charging modules can be configured to control the three voltages of the AC grid to charge three devices to be charged simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus, and reducing the cost. Furthermore, charging three vehicles simultaneously can also ensure the three-phase balance of the AC grid, thereby avoiding the damage to components, and improving the safety of vehicle charging.

In some embodiments, in order to improve the charging reliability, referring to FIG. 9, the charging method may further include:

S901: When it is detected that three devices to be charged are connected to the charging apparatus simultaneously, the three charging modules are controlled to all enter the pre-charging mode, and the three voltages of the AC grid are controlled by the power units in the three charging modules to pre-charge the first device to be charged, the second device to be charged and the third device to be charged simultaneously.

S902: When it is detected that the charging voltages of the three devices to be charged all meet a preset condition, the three charging modules are controlled to all exit the pre-charging mode, and the three voltages of the AC grid are controlled by the power units in the three charging modules to continue to charge the first device to be charged, the second device to be charged and the third device to be charged simultaneously.

In the embodiment of the present application, if it is detected that the three devices to be charged are connected to the charging apparatus simultaneously, at the initial power-on stage, the three charging modules are controlled to all enter the pre-charging mode. That is to say, when the three charging modules all enter the pre-charging mode, the three voltages of the AC grid are controlled by the power units in the three charging modules to pre-charge the first device to be charged, the second device to be charged and the third device to be charged simultaneously, that is, the three devices to be charged are slowly charged according to a smaller current.

In the embodiment of the present application, if it is detected that the charging voltages of the three devices to be charged all meet a preset condition (for example, the charging voltage reaches a preset value, or the charging time reaches a preset time), the three charging modules can be controlled to exit the pre-charging mode. That is to say, when the three charging modules all exit the pre-charging mode, the three voltages of the AC grid are controlled by the power units in the three charging modules to continue to charge the first device to be charged, the second device to be charged and the third device to be charged simultaneously, that is, the three devices to be charged are quickly charged according to a larger current.

In this way, in the embodiment of the present application, when it is detected that the three devices to be charged are connected to the charging apparatus simultaneously, the pre-charging units in the three charging modules all start to operate, so that the three charging modules all enter the pre-charging mode; and at this time, the power units in the three charging modules can control the AC grid to pre-charge the three devices to be charged, that is, slowly charge the three devices to be charged according to a smaller current. When it is detected that the charging voltages of the three devices to be charged all meet a preset condition, the pre-charging units in the three charging modules all stop operating, so that the three charging modules all exit the pre-charging mode; and at this time, the power units in the three charging modules can control the AC grid to charge the three devices to be charged, that is, quickly charge the three devices to be charged according to a larger current. Therefore, the damage to some components caused by high-voltage shock can be avoided, the reliability of vehicle charging is improved, and the charging speed of the three devices to be charged is also increased.

It can be understood that in the embodiment of the present application, the first charging module, the second charging module and the third charging module have the same circuit structure. Moreover, considering the three-phase balance of the AC grid, the three charging modules have the same charging power to charge the three devices to be charged simultaneously.

It can also be understood that in the embodiment of the present application, because the three charging modules have the same circuit structure, the same operating principle and the same charging and discharging operations, the following description will be made taking the first charging module as an example. The first charging module may at least include a first power unit, a first switch unit and a first pre-charging unit. The first switch unit includes a first switch and a second switch. The first pre-charging unit includes a third switch and a first resistor.

Exemplarily, as shown in FIG. 4, FIG. 5 and FIG. 6 described above, the first switch is connected between the positive electrode end of the first power unit and the positive electrode end of the first charging interface, and the second switch is connected between the negative electrode end of the first power unit and the negative electrode end of the first charging interface.

In the embodiment of the present application, for the first pre-charging unit, the third switch is connected in series with the first resistor. The first resistor here has a larger resistance value as a pre-charging resistor. When the third switch is switched on, the charging current at the initial power-on stage can be reduced due to the presence of the first resistor. At this time, pre-charging is performed according to a smaller current to avoid the damage to some components caused by high-voltage shock, thereby improving the reliability of vehicle charging.

In a possible implementation, when the first pre-charging unit is connected in parallel to two ends of the first switch, the charging method may further include: the second switch and the third switch are switched on to enable the first charging module to enter the pre-charging mode when it is detected that three devices to be charged are connected to the charging apparatus simultaneously; and the first switch is switched on and the third switch is switched off to enable the first charging module to exit the pre-charging mode when it is detected that the charging voltages of the three devices to be charged all meet a preset condition.

In the embodiments of the present application, whether the first pre-charging unit operates is controlled according to the switching-on and switching-off of the third switch, thereby controlling whether the first charging module enters the pre-charging mode.

Exemplarily, taking the first charging module as an example, when it is detected that the first device to be charged is connected, the third switch is switched on and the second switch is switched on simultaneously, indicating that the first pre-charging unit starts to operate, that is, the first charging module enters the pre-charging mode. When the charging voltage of the first device to be charged meets preset conditions (for example, the charging voltage reaches a preset value, or the charging time reaches a preset time), the third switch is switched off and the first switch is switched on simultaneously, indicating that the first pre-charging unit stops operating, that is, the first charging module exits the pre-charging mode.

That is to say, in the embodiment of the present application, when it is detected that three devices to be charged are connected to the charging apparatus simultaneously, the second switch and the third switch are switched on, indicating that the pre-charging unit in the first charging module starts to operate, that is, the first charging module enters the pre-charging mode. Similarly, after it is determined that the second charging module and the third charging module enter the pre-charging mode, due to the presence of the first resistor, the power units in the three charging modules can slowly charge the three devices to be charged according to a smaller current. When it is detected that the charging voltages of the three devices to be charged all meet a preset condition, the first switch is switched on and the third switch is switched off, that is, the first charging module exits the pre-charging mode. Similarly, after it is determined that the second charging module and the third charging module exit the pre-charging mode, the power units in the three charging modules can quickly charge the three devices to be charged according to a larger current.

In this way, in the embodiment of the present application, when it is detected that three devices to be charged are connected to the charging apparatus simultaneously, taking the first charging module as an example, the second switch and the third switch are switched on, indicating that the pre-charging unit in the first charging module starts to operate, that is, the first charging module enters the pre-charging mode. When it is detected that the charging voltages of the three devices to be charged all meet a preset condition, the first switch is switched on and the third switch is switched off, that is, the first charging module exits the pre-charging mode. Therefore, in the pre-charging mode, the damage to some components caused by high-voltage shock can be avoided, and the reliability of vehicle charging is improved. Moreover, after the pre-charging mode is exited, the charging speed of the devices to be charged can also be increased.

In another possible implementation, when the first pre-charging unit is connected in parallel to two ends of the second switch, the charging method may further include: the first switch and the third switch are switched on to enable the first charging module to enter the pre-charging mode when it is detected that three devices to be charged are connected to the charging apparatus simultaneously; and the second switch is switched on and the third switch is switched off to enable the first charging module to exit the pre-charging mode when it is detected that the charging voltages of the three devices to be charged all meet a preset condition.

In the embodiment of the present application, the first pre-charging unit is connected in parallel to two ends of the first switch, or the first pre-charging unit is connected in parallel to two ends of the second switch. The operation processes of the two modes are similar. Whether the first pre-charging unit operates is still controlled according to the switching-on and switching-off of the third switch, thereby controlling whether the first charging module enters the pre-charging mode.

Exemplarily, taking the first charging module as an example, when it is detected that the first device to be charged is connected, the third switch is switched on and the first switch is switched on simultaneously, indicating that the first pre-charging unit starts to operate, that is, the first charging module enters the pre-charging mode. When the charging voltage of the first device to be charged meets preset conditions (for example, the charging voltage reaches a preset value, or the charging time reaches a preset time), the third switch is switched off and the second switch is switched on simultaneously, indicating that the first pre-charging unit stops operating, that is, the first charging module exits the pre-charging mode.

That is to say, in the embodiment of the present application, when it is detected that three devices to be charged are connected to the charging apparatus simultaneously, taking the first charging module as an example, the first switch and the third switch are switched on, indicating that the pre-charging unit in the first charging module starts to operate, that is, the first charging module enters the pre-charging mode. When it is detected that the charging voltages of the three devices to be charged all meet a preset condition, the second switch is switched on and the third switch is switched off, that is, the first charging module exits the pre-charging mode. Therefore, in the pre-charging mode, the damage to some components caused by high-voltage shock can be avoided, and the reliability of vehicle charging is improved. Moreover, after the pre-charging mode is exited, the charging speed of the devices to be charged can also be increased.

It can also be understood that in the embodiment of the present application, for the first power unit in the first charging module, the first power unit may include a first power device, a second power device, a third power device and a fourth power device.

In some embodiments, taking the first charging module as an example, the step S801 of enabling the first charging module to receive the first voltage of the AC grid, convert the first voltage into the first output voltage, and provide the first output voltage to the first device to be charged for charging may include: during a positive half cycle of the first voltage, the first power device and the third power device are controlled to be in a switched-on state, the second power device and the fourth power device are controlled to be in a switched-off state, the first power unit performs voltage conversion on the first voltage, and an obtained first output voltage is provided to the first device to be charged for charging; and during a negative half cycle of the first voltage, the first power device and the third power device are controlled to be in a switched-off state, the second power device and the fourth power device are controlled to be in a switched-on state, the first power unit performs voltage conversion on the first voltage, and an obtained first output voltage is provided to the first device to be charged for charging.

In the embodiment of the present application, taking the charging of the first device to be charged by the AC grid as an example, during the positive half cycle of the first voltage of the AC grid, the first power device T1 and the third power device T3 are controlled to be in a switched-on state, the second power device T2 and the fourth power device T4 are controlled to be in a switched-off state, the first power unit performs voltage conversion on the first voltage, and an obtained first output voltage is provided to the first device to be charged for charging; and during the negative half cycle of the first voltage of the AC grid, the first power device T1 and the third power device T3 are controlled to be in a switched-off state, the second power device T2 and the fourth power device T4 are controlled to be in a switched-on state, the first power unit performs voltage conversion on the first voltage, and an obtained first output voltage is provided to the first device to be charged for charging. Here, the first voltage of the AC grid is an AC voltage, and the obtained first output voltage is a DC voltage. That is, the voltage conversion during the charging process is AC to DC conversion, such as an AC/DC converter.

In the embodiment of the present application, here, the polarity of the voltage applied to the first device to be charged can be switched through four power devices. Specifically, during the positive half cycle, the first power device T1 and the third power device T3 are controlled to be in a switched-on state, the second power device T2 and the fourth power device T4 are controlled to be in a switched-off state, the first power unit converts the first voltage into a first output voltage, and the first output voltage is provided to the first device to be charged for charging; and during the negative half cycle, the first power device T1 and the third power device T3 are controlled to be in a switched-off state, the second power device T2 and the fourth power device T4 are controlled to be in a switched-on state, the first power unit converts the first voltage into a first output voltage, and the first output voltage is provided to the first device to be charged for charging, thereby achieving the DC output of the first charging module. Similarly, the DC output of the second charging module and the third charging module can also be achieved, so that the AC grid can charge the three devices to be charged simultaneously, thereby improving the charging efficiency.

In some embodiments, still taking the first charging module as an example, if the first device to be charged feeds electric energy back to the AC grid, the charging method may further include: the first power device and the third power device are controlled to be in a switched-on state, the second power device and the fourth power device are controlled to be in a switched-off state, the first power unit performs voltage conversion on a DC voltage provided by the first device to be charged, and an obtained positive half cycle voltage is fed back to the AC grid; and the first power device and the third power device are controlled to be in a switched-off state, the second power device and the fourth power device are controlled to be in a switched-on state, the first power unit performs voltage conversion on a DC voltage provided by the first device to be charged, and an obtained negative half cycle voltage is fed back to the AC grid.

In the embodiment of the present application, here, the voltage conversion during the process of feeding the electric energy back to the AC grid may be inverse conversion from DC to AC. Specifically, the inversion from DC to AC can be achieved by switching four power devices. First, the first power device T1 and the third power device T3 are controlled to be in a switched-on state, the second power device T2 and the fourth power device T4 are controlled to be in a switched-off state, the first power unit inversely converts a DC voltage provided by the first device to be charged into a positive half cycle AC voltage, and thus, the obtained positive half cycle voltage is fed back to the AC grid; and then, the first power device T1 and the third power device T3 are controlled to be in a switched-off state, the second power device T2 and the fourth power device T4 are controlled to be in a switched-on state, the first power unit inversely converts a DC voltage provided by the first device to be charged into a negative half cycle AC voltage, and thus, the obtained negative half cycle voltage is fed back to the AC grid.

That is to say, in the embodiment of the present application, the first power unit 1011 is an H-bridge circuit composed of four power devices, so that the circuit structure of the first charging module 101 is simple, and the cost is low. Moreover, when the three charging modules all use the H-bridge circuit, a variety of connection methods (such as a star connection method and a triangle connection method) on AC sides can be achieved, and the AC grid can charge the three devices to be charged simultaneously. Furthermore, the three devices to be charged can also feed electric energy back to the AC grid together, thereby achieving the V2G function.

An embodiment of the present application provides a charging method. The first charging module receives the first voltage of the AC grid, converts the first voltage into a first output voltage, and provides the first output voltage to the first device to be charged for charging; the second charging module receives the second voltage of the AC grid, converts the second voltage into a second output voltage, and provides the second output voltage to the second device to be charged for charging; and the third charging module receives the third voltage of the AC grid, converts the third voltage into a third output voltage, and provides the third output voltage to the third device to be charged for charging. In this way, the charging method can charge three devices to be charged (such as electric vehicles) simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus. Compared with the scenario in which multiple vehicles are charged simultaneously in related technologies, the construction expenditure of a charging station can also be reduced, and the cost can be reduced. Furthermore, charging three vehicles simultaneously can also ensure the three-phase balance of the AC grid, thereby avoiding the damage to components, and improving the safety of vehicle charging.

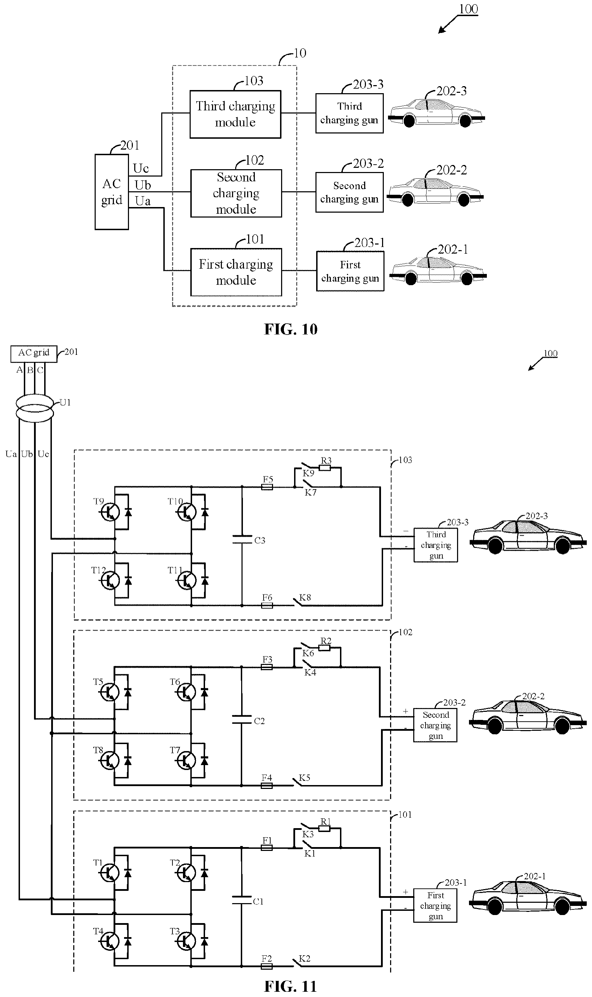

In another embodiment of the present application, FIG. 10 is a schematic diagram of a composition structure of a charging system provided by an embodiment of the present application. As shown in FIG. 10, a charging system 100 may include three devices to be charged and the charging apparatus 10 according to any one of the above embodiments. The three devices to be charged include a first device 202-1 to be charged, a second device 202-2 to be charged, and a third device 202-3 to be charged, where

the first charging module 101 is connected with the first device 202-1 to be charged, and is configured to control the first voltage of the AC grid 201 to charge the first device 202-1 to be charged;
the second charging module 102 is connected with the second device 202-2 to be charged, and is configured to control the second voltage of the AC grid 201 to charge the second device 202-2 to be charged; and
the third charging module 103 is connected with the third device 202-3 to be charged, and is configured to control the third voltage of the AC grid 201 to charge the third device 202-3 to be charged.

In some embodiments, as shown in FIG. 10, the charging system 100 may further include three charging guns. The three charging guns include a first charging gun 203-1, a second charging gun 203-2, and a third charging gun 203-3.

For the first charging module 101, the second charging module 102 and the third charging module 103, the output ends of the three charging modules are respectively provided with a charging interface (for example, the first charging interface 1013 corresponding to the first charging module 101); and one end of each charging gun is connected with the corresponding charging interface, and the other end of each charging gun is inserted into the corresponding position of the device to be charged to achieve the charging connection between the charging gun and the corresponding device to be charged.

In the embodiment of the present application, the charging gun may be fixedly connected with the corresponding charging interface as a part of the charging apparatus 10, and in this case, the charging interface may also be regarded as a charging gun, which is configured to achieve the connection between the charging module and the corresponding device to be charged through the charging gun; or the charging gun may also be arranged separately from the charging apparatus 10, and when charging is needed, one end of the charging gun is connected to the corresponding charging interface, and the other end of the charging gun is inserted into the device to be charged.

Exemplarily, taking the first charging module 101 as an example, one end of the first charging gun is connected with the first charging interface, and the other end of the first charging gun is connected with the first device 202-1 to be charged. Here, the first charging gun may be fixedly connected with the first charging interface of the charging apparatus 10 as a part of the charging apparatus 10; or the first charging gun may also be arranged separately from the charging apparatus 10, and when the first device 202-1 to be charged needs to be charged, a user connects the first device 202-1 to be charged to the charging apparatus 10 through the first charging gun.

An embodiment of the present application provides a charging system. In the charging system 100, the charging apparatus can charge the three devices to be charged simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus. Compared with the scenario in which multiple vehicles are charged simultaneously in related technologies, the construction expenditure of a charging station can also be reduced, and the cost can be reduced. Furthermore, charging three vehicles simultaneously can also ensure the three-phase balance of the AC grid, thereby avoiding the damage to components, and improving the safety of vehicle charging.

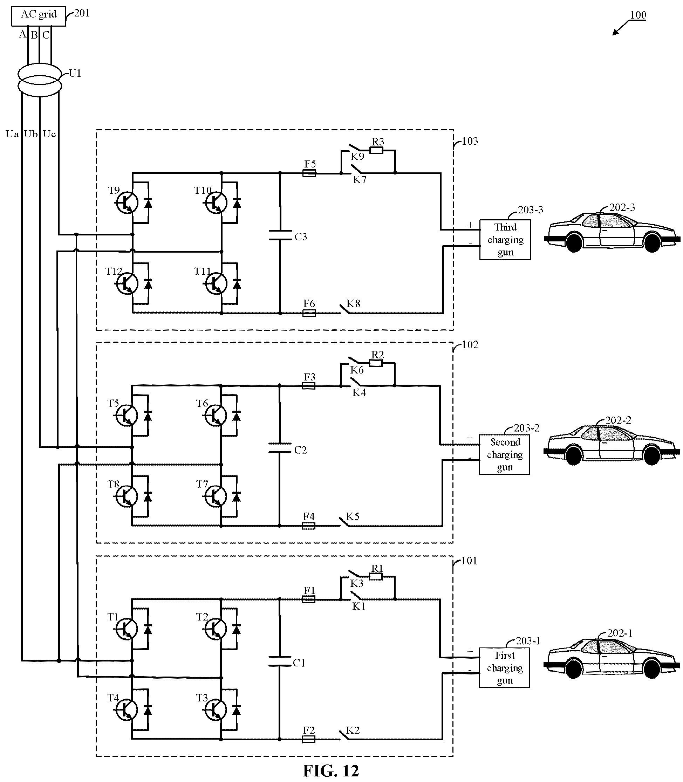

In a specific embodiment, FIG. 11 is a first schematic diagram of a detailed structure of a charging system provided by an embodiment of the present application, and FIG. 12 is a second schematic diagram of a detailed structure of a charging system provided by an embodiment of the present application. As shown in FIG. 11 or FIG. 12, the charging system 100 may include a first charging module 101, a second charging module 102, a third charging module 103, a first transformer U1, an AC grid 201, a first charging gun 203-1, a second charging gun 203-2, a third charging gun 203-3, a first device 202-1 to be charged, a second device 202-2 to be charged, and a third device 202-3 to be charged.

In the embodiment of the present application, the first charging module 101 charges the first device 202-1 to be charged through the first charging gun 203-1, the second charging module 102 charges the second device 202-2 to be charged through the second charging gun 203-2, and the third charging module 103 charges the third device 202-3 to be charged through the third charging gun 203-3. The devices to be charged here may be electric cars. In addition, the function of the first transformer U1 is to transform the voltage of the AC grid 201 into the three-phase AC power required by the charging apparatus 10. Exemplarily, the voltage of the AC grid is 500 kV, 220 kV, 110 kV, 35 kV, 10 kV, 6 kV, 3 kV, etc., which can be converted into 380 V three-phase AC power through the first transformer U1.

In the first charging module 101, the first charging module 101 may include a first power device T1, a second power device T2, a third power device T3, a fourth power device T4, a first capacitor C1, a first fuse F1, a second fuse F2, a first switch K1, a second switch K2, a third switch K3, and a first resistor R1. The specific connection relationship is detailed in the first charging module 101 in FIG. 10. The H-bridge circuit composed of the first power device T1, the second power device T2, the third power device T3 and the fourth power device T4 is a first power unit, the first fuse F1 and the second fuse F2 are first protection devices, the third switch K3 and the first resistor R1 are connected in series to form a first pre-charging unit, and the first pre-charging unit is connected in parallel to two ends of the first switch K1.

In the second charging module 102, the second charging module 102 may include a fifth power device T5, a sixth power device T6, a seventh power device T7, an eighth power device T8, a second capacitor C2, a third fuse F3, a fourth fuse F4, a fourth switch K4, a fifth switch K5, a sixth switch K6, and a second resistor R2. The specific connection relationship is detailed in the second charging module 102 in FIG. 10. The H-bridge circuit composed of the fifth power device T5, the sixth power device T6, the seventh power device T7 and the eighth power device T8 is a second power unit, the third fuse F3 and the fourth fuse F4 are second protection devices, the sixth switch K6 and the second resistor R2 are connected in series to form a second pre-charging unit, and the second pre-charging unit is connected in parallel to two ends of the fourth switch K4.

In the third charging module 103, the third charging module 103 may include a ninth power device T9, a tenth power device T10, an eleventh power device T11, a twelfth power device T12, a third capacitor C3, a fifth fuse F5, a sixth fuse F6, a seventh switch K7, an eighth switch K8, a ninth switch K9 and a third resistor R3. The specific connection relationship is detailed in the third charging module 103 in FIG. 10. The H-bridge circuit composed of the ninth power device T9, the tenth power device T10, the eleventh power device T11 and the twelfth power device T12 is a third power unit, the fifth fuse F5 and the sixth fuse F6 are third protection devices, the ninth switch K9 and the third resistor R3 are connected in series to form a third pre-charging unit, and the third pre-charging unit is connected in parallel to two ends of the seventh switch K7.

In the embodiment of the present application, the third power unit in the third charging module 103 and the second power unit in the second charging module 102 have the same circuit structure as the first power unit in the first charging module 101 (both are H-bridge structures), and have similar operating principles; the third protection device in the third charging module 103 and the second protection device in the second charging module 102 have the same circuit structure as the first protection device in the first charging module 101, and have similar operating principles; and the third pre-charging unit in the third charging module 103 and the second pre-charging unit in the second charging module 102 have the same circuit structure as the first pre-charging unit in the first charging module 101, and have similar operating principles. The description of the relevant structures and operating principles of the first charging module 101 based on the above will not be described in detail here.

In the embodiment of the present application, the difference between FIG. 11 and FIG. 12 is that the connection method on AC sides of the three charging modules in FIG. 11 is a star connection method. In this case, the first voltage of the AC grid 201 is the phase voltage of the phase A (represented by Ua), the second voltage of the AC grid 201 is the phase voltage of the phase B (represented by Ub), and the third voltage of the AC grid 201 is the phase voltage of the phase C (represented by Uc). The connection method on AC sides of the three charging modules in FIG. 12 is a triangle connection method (or referred to as a "delta form connection method"). In this case, the first voltage of the AC grid 201 is the line voltage between the phase A and the phase C (represented by Uac), the second voltage of the AC grid 201 is the line voltage between the phase B and the phase A (represented by Uba), and the third voltage of the AC grid 201 is the line voltage between the phase C and the phase B (represented by Ucb).

In the embodiment of the present application, taking a charging pile as an example, in order to solve the problems in related technologies that the circuit structure of the charging module is complex, the cost of the charging pile is high, and the charging efficiency is low due to multiple cars waiting in line for charging, The embodiment of the present application provides a charging pile solution for charging three cars simultaneously, which specifically includes the following:

(1) The three charging modules (the first charging module 101, the second charging module 102 and the third charging module 103) all use a power unit having an H-bridge structure, and the power unit having the H-bridge structure can enable the AC grid to charge three cars simultaneously.

(2) The three charging modules (the first charging module 101, the second charging module 102 and the third charging module 103) all use the power unit having the H-bridge structure, and the power unit having the H-bridge structure can also enable the three cars to feed electric energy to the power grid together, thereby achieving the V2G function.

(3) In the H-bridge structure, the polarity of the voltage applied to the electric cars is switched by four switches (such as T1/T2/T3/T4 in the first charging module 101, T5/T6/T7/T8 in the second charging module 102, or T9/T10/T11/T12 in the third charging module 103), thereby achieving the DC output of the three charging modules. Taking FIG. 11 as an example, during the positive half cycle of the phase Ua, in the first charging module 101, T1 and T3 are switched on, T2 and T4 are switched off, and the first charging gun 203-1 outputs DC power to charge the first device 202-1 to be charged (such as an electric car); and during the negative half cycle of the phase Ua, in the first charging module 101, T2 and T4 are switched on, T1 and T3 are switched off, and the first charging gun 203-1 outputs DC power to charge the first device 202-1 to be charged (such as an electric car). Similarly, the second charging module 102 and the third charging module 103 change in positive and negative half cycles of the phase Ub and the phase Uc.

Exemplarily, during the positive half cycle of the phase Ub, in the second charging module 102, T5 and T7 are switched on, T6 and T8 are switched off, and the second charging gun 203-2 outputs DC power to charge the second device 202-2 to be charged (such as an electric car); and during the negative half cycle of the phase Ub, in the second charging module 102, T6 and T8 are switched on, T5 and T7 are switched off, and the second charging gun 203-2 outputs DC power to charge the second device 202-2 to be charged (such as an electric car). During the positive half cycle of the phase Uc, in the third charging module 103, T9 and T11 are switched on, T10 and T12 are switched off, and the third charging gun 203-3 outputs DC power to charge the third device 202-3 to be charged (such as an electric car); and during the negative half cycle of the phase Uc, in the third charging module 103, T10 and T12 are switched on, T9 and T 11 are switched off, and the third charging gun 203-3 outputs DC power to charge the third device 202-3 to be charged (such as an electric car).

(4) In the H-bridge structure, the inversion from DC to AC is achieved by switching four power devices (such as T1/T2/T3/T4 in the first charging module 101, T5/T6/T7/T8 in the second charging module 102, or T9/T10/T11/T12 in the third charging module 103), thereby achieving the V2G function.

An embodiment of the present application provides a charging system. The three charging modules in the charging apparatus can be configured to charge the three devices to be charged simultaneously, thereby avoiding the situation that electric vehicles have to queue for charging, and improving the charging efficiency. In addition, the three charging modules are respectively connected with the three voltages of the AC grid, and the phase difference between each two of the three voltages is 120 degrees, thereby simplifying the circuit structure of the charging apparatus. Compared with the scenario in which multiple vehicles are charged simultaneously in related technologies, the construction expenditure of a charging station can also be reduced, and the cost can be reduced. Furthermore, charging three vehicles simultaneously can also ensure the three-phase balance of the AC grid, thereby avoiding the damage to components, and improving the safety of vehicle charging.

Another embodiment of the present application provides a computer-readable storage medium, storing a computer program. When the computer program is executed, the charging method according to any one of the above embodiments is implemented.

Still another embodiment of the present application further provides a computer program product, including a computer program or instruction. When the computer program or instruction is executed, the charging method according to any one of the above embodiments is implemented.

It should be understood that those skilled in the art should understand that the present application may take the form of hardware embodiments, software embodiments, or embodiments combining software and hardware aspects. Furthermore, the present application may take the form of a computer program product implemented on one or more computer-usable storage media (including, but not limited to, a magnetic disk memory, an optical memory, and the like) containing computer-usable program codes.

It should also be understood that the reference throughout the specification to "one embodiment" or "an embodiment" implies that specific features, structures, or characteristics related to the embodiments are included in at least one embodiment of the present application. Thus, "in one embodiment" or "in an embodiment" that appears throughout the specification may not necessarily refer to the same embodiment. In addition, these specific features, structures, or characteristics may be combined in one or more embodiments in any suitable manner. It should be understood that in various embodiments of the present application, the sizes of the serial numbers of the above steps/processes do not imply the order of execution, and the execution order of each step/process should be determined by its function and internal logic, and should not constitute any limitation on the implementation process of the embodiments of the present application. The serial numbers of the above embodiments of the present application are only for description and do not represent the advantages or disadvantages of the embodiments.

It should be noted that in the present application, the terms "include", "contain" or any other variants thereof are intended to cover non-exclusive inclusions, so that a process, method, article, or apparatus including a series of elements includes not only those elements, but also other elements that are not explicitly listed, or further includes elements inherent to such process, method, article, or apparatus. Without more limitations, the element defined by the sentence "including one ..." does not exclude that there are still other same elements in the process, method, article or apparatus including this element.

In several embodiments provided in the present application, it should be understood that the disclosed system, device and method may be implemented in other manners. The device embodiments described above are only exemplary. For example, the division of units is only a logical function division. In an actual implementation, there may be other division methods. For example, a plurality of units or assemblies may be combined or may be integrated into another system, or some features may be ignored, or not implemented. In addition, the coupling or direct coupling or communication connection between displayed or discussed components may be implemented through some interfaces, and the indirect coupling or communication connection between devices or units may be electrical, mechanical, or in other forms.

The above units described as separate components may or may not be physically separated, and components displayed as units may or may not be physical units; they may be located in one place or distributed onto a plurality of network units; and some or all of the units may be selected according to actual needs to achieve the purpose of the solution of this embodiment. In addition, all functional units in the embodiments of the present application may be completely integrated into one processing unit, or each unit may serve as a separate unit, or two or more units may be integrated into one unit. The integrated units mentioned above may be implemented in the form of hardware or in the form of hardware and software functional units.

The above descriptions are merely preferred embodiments of the present application, and are not intended to limit the scope of protection of the present application. Any modifications, equivalent replacements, improvements, and the like made within the concept and principle of the present application shall be included within the scope of the present application.

## Claims

1.  A charging apparatus, comprising three charging modules that comprise a first charging module, a second charging module and a third charging module, wherein:

    the first charging module is configured to receive a first voltage of an AC grid, convert the first voltage into a first output voltage, and provide the first output voltage to a first device to be charged for charging;
    the second charging module is configured to receive a second voltage of the AC grid, convert the second voltage into a second output voltage, and provide the second output voltage to a second device to be charged for charging;
    the third charging module is configured to receive a third voltage of the AC grid, convert the third voltage into a third output voltage, and provide the third output voltage to a third device to be charged for charging;
    the first charging module, the second charging module and the third charging module have a one-to-one correspondence relationship with the first device to be charged, the second device to be charged and the third device to be charged; the first voltage, the second voltage and the third voltage have the same frequency and amplitude, with a phase difference of 120 degrees between each two thereof; and
the three charging modules are configured to control the three voltages of the AC grid to charge the first device to be charged, the second device to be charged and the third device to be charged simultaneously.

2. The charging apparatus according to claim 1, wherein:

a first input end of the first charging module is connected with a first phase line of the AC grid;
a first input end of the second charging module is connected with a second phase line of the AC grid;
a first input end of the third charging module is connected with a third phase line of the AC grid; and
a second input end of the first charging module is respectively connected with a second input end of the second charging module and a second input end of the third charging module.

3. The charging apparatus according to claim 1, wherein:

a first input end of the first charging module is connected with a first phase line of the AC grid, and a second input end of the first charging module is connected with a third phase line of the AC grid;
a first input end of the second charging module is connected with a second phase line of the AC grid, and a second input end of the second charging module is connected with the first phase line of the AC grid; and
a first input end of the third charging module is connected with the third phase line of the AC grid, and a second input end of the third charging module is connected with the second phase line of the AC grid.

4. The charging apparatus according to any one of claims 1 to 3, wherein the first charging module, the second charging module and the third charging module have the same circuit structure; and
the first charging module comprises a first power unit, a first switch unit and a first charging interface, the first switch unit is connected between the first power unit and the first charging interface, and the first charging interface is configured to connect the first device to be charged.

5. The charging apparatus according to claim 4, wherein the first switch unit comprises a first switch and/or a second switch, wherein:

the first switch is connected between a positive electrode end of the first power unit and a positive electrode end of the first charging interface; and
the second switch is connected between a negative electrode end of the first power unit and a negative electrode end of the first charging interface.

6. The charging apparatus according to claim 5, wherein the first charging module further comprises a first pre-charging unit, wherein:

the first pre-charging unit is connected in parallel to two ends of the first switch; or,
the first pre-charging unit is connected in parallel to two ends of the second switch.

7. The charging apparatus according to claim 6, wherein the first pre-charging unit comprises a third switch and a first resistor, and the third switch is connected in series with the first resistor, wherein:
the first pre-charging unit is configured to control the first charging module to enter a pre-charging mode when the third switch is in a switched-on state, and/or control the first charging module to exit the pre-charging mode when the third switch is in a switched-off state.

8. The charging apparatus according to any one of claims 4 to 7, wherein the first charging module further comprises a first protection device, wherein:
the first protection device is connected between the first power unit and the first charging interface, and is configured to control the path between the first power unit and the first charging interface to be switched off when the first charging module has a failure.

9. The charging apparatus according to claim 8, wherein the first protection device comprises a first fuse and/or a second fuse, wherein:

the first fuse is connected between a positive electrode end of the first power unit and a positive electrode end of the first charging interface; and
the second fuse is connected between a negative electrode end of the first power unit and a negative electrode end of the first charging interface.

10. The charging apparatus according to any one of claims 4 to 9, wherein the first power unit comprises an H-bridge circuit composed of four power devices.

11. A charging method applied to a charging apparatus comprising three charging modules, and the three charging modules comprising a first charging module, a second charging module and a third charging module, wherein the charging method comprises:

enabling the first charging module to receive a first voltage of an AC grid, convert the first voltage into a first output voltage, and provide the first output voltage to a first device to be charged for charging;

enabling the second charging module to receive a second voltage of the AC grid, convert the second voltage into a second output voltage, and provide the second output voltage to a second device to be charged for charging; and

enabling the third charging module to receive a third voltage of the AC grid, convert the third voltage into a third output voltage, and provide the third output voltage to a third device to be charged for charging;

the first charging module, the second charging module and the third charging module have a one-to-one correspondence relationship with the first device to be charged, the second device to be charged and the third device to be charged; and

the first voltage, the second voltage and the third voltage have the same frequency and amplitude, with a phase difference of 120 degrees between each two thereof.

12. The charging method according to claim 11, wherein the first charging module comprises a first switch unit and a first pre-charging unit, the first switch unit comprises a first switch and a second switch, and the first pre-charging unit comprises a third switch and a first resistor;

when the first pre-charging unit is connected in parallel to two ends of the first switch, the charging method further comprises: and

switching on the second switch and the third switch to enable the first charging module to enter a pre-charging mode when it is detected that three devices to be charged are connected to the charging apparatus simultaneously; and

switching on the first switch and switching off the third switch to enable the first charging module to exit the pre-charging mode when it is detected that charging voltages of the three devices to be charged all meet a preset condition.

13. The charging method according to claim 12, wherein when the first pre-charging unit is connected in parallel to two ends of the second switch, and the charging method further comprises:

switching on the first switch and the third switch to enable the first charging module to enter the pre-charging mode when it is detected that three devices to be charged are connected to the charging apparatus simultaneously; and

switching on the second switch and switching off the third switch to enable the first charging module to exit the pre-charging mode when it is detected that the charging voltages of the three devices to be charged all meet a preset condition.

14. The charging method according to claim 12 or 13, wherein the charging method further comprises:

controlling three voltages of the AC grid by power units in the three charging modules to pre-charge the first device to be charged, the second device to be charged and the third device to be charged simultaneously when the three charging modules all enter the pre-charging mode; and

controlling the three voltages of the AC grid by the power units in the three charging modules to continue to charge the first device to be charged, the second device to be charged and the third device to be charged simultaneously when the three charging modules all exit the pre-charging mode.

15. The charging method according to any one of claims 11 to 14, wherein the first charging module comprises a first power unit, and the first power unit comprises a first power device, a second power device, a third power device and a fourth power device; and

the enabling the first charging module to receive a first voltage of an AC grid, convert the first voltage into a first output voltage, and provide the first output voltage to a first device to be charged for charging comprises:

during a positive half cycle of the first voltage, controlling the first power device and the third power device to be in a switched-on state, controlling the second power device and the fourth power device to be in a switched-off state, performing voltage conversion on the first voltage by the first power unit, and providing the obtained first output voltage to the first device to be charged for charging; and

during a negative half cycle of the first voltage, controlling the first power device and the third power device to be in a switched-off state, controlling the second power device and the fourth power device to be in a switched-on state, performing voltage conversion on the first voltage by the first power unit, and providing the obtained first output voltage to the first device to be charged for charging.

**16.** The charging method according to claim 15, wherein the charging method further comprises:

controlling the first power device and the third power device to be in a switched-on state, controlling the second power device and the fourth power device to be in a switched-off state, performing voltage conversion by the first power unit on a DC voltage provided by the first device to be charged, and feeding an obtained positive half cycle voltage back to the AC grid; and controlling the first power device and the third power device to be in a switched-off state, controlling the second power device and the fourth power device to be in a switched-on state, performing voltage conversion by the first power unit on a DC voltage provided by the first device to be charged, and feeding an obtained negative half cycle voltage back to the AC grid.

**17.** A charging system, the charging system comprising three devices to be charged and the charging apparatus according to any one of claims 1 to 10, and the three devices to be charged comprising a first device to be charged, a second device to be charged and a third device to be charged, wherein:

the first charging module is connected with the first device to be charged, and is configured to control a first voltage of the AC grid to charge the first device to be charged;
the second charging module is connected with the second device to be charged, and is configured to control a second voltage of the AC grid to charge the second device to be charged; and
the third charging module is connected with the third device to be charged, and is configured to control a third voltage of the AC grid to charge the third device to be charged.

**FIG. 1**

**FIG. 2**

**FIG. 3**

**FIG. 4**

**FIG. 5**

**FIG. 6**

EP 4 699 852 A1

**FIG. 7**

| Enable the first charging module to receive a first voltage of an AC grid, convert the first voltage into a first output voltage, and provide the first output voltage to a first device to be charged for charging | S801 |

| Enable the second charging module to receive a second voltage of the AC grid, convert the second voltage into a second output voltage, and provide the second output voltage to a second device to be charged for charging | S802 |

| Enable the third charging module to receive a third voltage of the AC grid, convert the third voltage into a third output voltage, and provide the third output voltage to a third device to be charged for charging | S803 |

**FIG. 8**

| When it is detected that three devices to be charged are connected to the charging apparatus simultaneously, control the three charging modules to all enter the pre-charging mode, and control the three voltages of the AC grid by power units in the three charging modules to pre-charge the first device to be charged, the second device to be charged and the third device to be charged simultaneously | S901 |

| When it is detected that the charging voltages of the three devices to be charged all meet a preset condition, control the three charging modules to all exit the pre-charging mode, and control the three voltages of the AC grid by the power units in the three charging modules to continue to charge the first device to be charged, the second device to be charged and the third device to be charged simultaneously | S902 |

**FIG. 9**

**FIG. 10**

**FIG. 11**

FIG. 12

## INTERNATIONAL SEARCH REPORT

| International application No. |
| --- |
| **PCT/CN2024/135348** |

| A. | CLASSIFICATION OF SUBJECT MATTER |
| --- | --- |
| | B60L 53/00(2019.01)i; B60L53/60(2019.01)i |

According to International Patent Classification (IPC) or to both national classification and IPC

| B. | FIELDS SEARCHED |
| --- | --- |

Minimum documentation searched (classification system followed by classification symbols)

    IPC:B60L

Documentation searched other than minimum documentation to the extent that such documents are included in the fields searched

Electronic data base consulted during the international search (name of data base and, where practicable, search terms used)

    CNABS, CNTXT, CNKI: 电网, 三相, 电压, 交流, 转换, 充电, 预充电, 功率; VEN, DWPI, WPABS, USTXT, EPTXT, WOTXT: power grid, electrical grid, three-phase, tension, voltage, AC, alternating current, conversion, charge, pre-charge, power.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118457284 A (CONTEMPORARY AMPEREX TECHNOLOGY CO., LTD. et al.) 09 August 2024 (2024-08-09) <br> entire document | 1-17 |
| Y | CN 111098748 A (ZHANG YIZHOU) 05 May 2020 (2020-05-05) <br> description, paragraphs 8-46, and figures 1-10 | 1-17 |
| Y | CN 113580963 A (CHONGQING CRRC TIMES ELECTRICAL TECHNOLOGY CO., LTD.) 02 November 2021 (2021-11-02) <br> description, paragraphs 26-91, and figures 1-3 | 1-17 |
| A | CN 218243078 U (HAI ROBOTICS CO., LTD.) 06 January 2023 (2023-01-06) <br> entire document | 1-17 |
| A | CN 117416232 A (SHENZHEN GURUIWATE YUNCHONG ENERGY TECHNOLOGY CO., LTD.) 19 January 2024 (2024-01-19) <br> entire document | 1-17 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 March 2025** | **22 March 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/135348** |

### C. DOCUMENTS CONSIDERED TO BE RELEVANT

| Category* | Citation of document, with indication, where appropriate, of the relevant passages | Relevant to claim No. |
| --- | --- | --- |
| A | CN 115085322 A (SUNGROW POWER SUPPLY CO., LTD.) 20 September 2022 (2022-09-20)<br>entire document | 1-17 |
| A | DE 102014212936 A1 (SIEMENS AG) 07 January 2016 (2016-01-07)<br>entire document | 1-17 |

Form PCT/ISA/210 (second sheet) (July 2022)

## INTERNATIONAL SEARCH REPORT
### Information on patent family members

International application No.

**PCT/CN2024/135348**

| Patent document cited in search report | | | Publication date (day/month/year) | Patent family member(s) | | | Publication date (day/month/year) |
|---|---|---|---|---|---|---|---|
| CN | 118457284 | A | 09 August 2024 | None | | | |
| CN | 111098748 | A | 05 May 2020 | None | | | |
| CN | 113580963 | A | 02 November 2021 | None | | | |
| CN | 218243078 | U | 06 January 2023 | WO | 2024017172 | A1 | 25 January 2024 |
| CN | 117416232 | A | 19 January 2024 | None | | | |
| CN | 115085322 | A | 20 September 2022 | None | | | |
| DE | 102014212936 | A1 | 07 January 2016 | None | | | |

Form PCT/ISA/210 (patent family annex) (July 2022)

**EP 4 699 852 A1**

## REFERENCES CITED IN THE DESCRIPTION

**Patent documents cited in the description**

- CN 202410912856X